Europäisches Patentamt

European Patent Office

Office européen des brevets

(11) Publication number: **0 411 440 A2**

# EUROPEAN PATENT APPLICATION

(21) Application number: 90114159.8

(51) Int. Cl.5: **H04N 5/335**, H04N 5/92

(22) Date of filing: 24.07.90

(30) Priority: 02.08.89 JP 199434/89
10.11.89 JP 291281/89

(43) Date of publication of application:
06.02.91 Bulletin 91/06

(84) Designated Contracting States:
**DE FR GB**

(71) Applicant: **HITACHI, LTD.**
**6, Kanda Surugadai 4-chome**
**Chiyoda-ku, Tokyo 101(JP)**

Applicant: **HITACHI VIDEO ENGINEERING, INC.**
**292, Yoshidacho Totsuka-ku**
**Yokohama-shi Kanagawa-ken 244(JP)**

(72) Inventor: **Yoshioka, Atsushi**
**Nr. 1122 Kashiwadai-Kurarute, 701-1**
**Kashiwagaya**
**Ebina-shi, Kanagawa-ken 243-04(JP)**
Inventor: **Watatani, Yoshizumi**
**1379-15 Chogo**
**Fujisawa-shi, Kanagawa-ken 252(JP)**
Inventor: **Azuma, Nobuo**
**1803-6 Kamikurata-cho, Totsuka-ku**
**Yokohama-shi, Kanagawa-ken 244(JP)**
Inventor: **Otsubo, Tadasu**
**Nr 321 Hitachi-Chigasaki-Domitori, 1-9**
**Honjuku-cho**
**Chigasaki-shi, Kanagawa-ken 253(JP)**
Inventor: **Matsuo, Shuichi**
**Nr. 104 Joifuru-Soshigaya, 1-17-4 Chitosedai**
**Setagaya-ku, Tokyo 157(JP)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20 20**
**D-8000 München 86(DE)**

(54) **Camera system and camera recording system.**

(57) Herein disclosed is a camera recording system which is capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio. Further disclosed is a usable method which allows the user to take only one turn for selecting the aspect ratio. The method is represented by three kinds: one using a lens unit; another using the scanning range of an image tube; and still another using an expander circuit. What is required of the user is only one turn of switching the lenses or switches, and the remaining necessary switching operations are automated.

FIG. 1

## CAMERA SYSTEM AND CAMERA RECORDING SYSTEM

### BACKGROUND OF THE INVENTION

The present invention relates to a camera recording system using a TV camera and a VTR and, more particularly, to a system suited for imaging a horizontally longer field angle than that now in use.

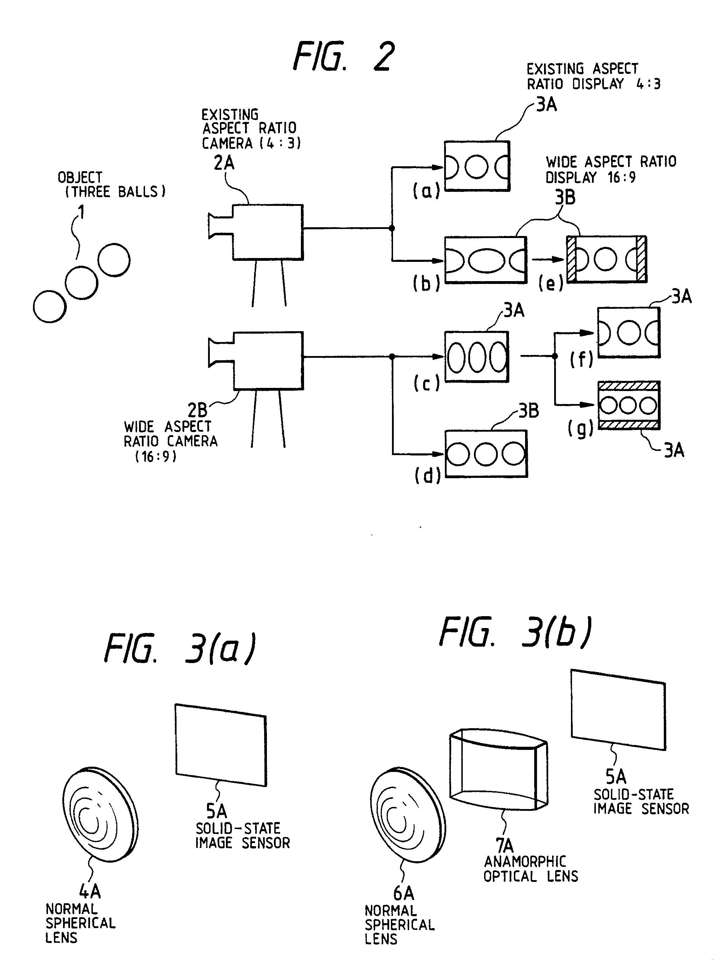

In the TV system of the existing NTSC and PAL type, the ratio (i.e., the aspect ratio) between the horizontal and vertical lengths of the frame is 4 : 3, and the camera or display is naturally designed while being premised upon that ratio. In recent years, however, there has been a proposal that the aspect ratio is horizontally expanded from the existing one to 5 : 3, 14 : 9 or 16 : 9 so that the presence may be improved to that of the movie screen. In this improvement, the camera and the display has a horizontally longer frame while being based upon the NTSC system. Fig. 2 shows an image on the display so as to give a specific presence.

As shown in Fig. 2, an object 1 composed of three balls arrayed in a horizontal line is imaged with a common vertical field angle by a camera 2A having the existing aspect ratio of 4 : 3 and a wide aspect ratio camera 2B having a horizontally expanded field angle of 16 : 9, for example. When the output of the wide aspect ratio camera 2B is projected on a wide display 3B of 16 : 9, for example, the three-ball object 1 is projected to the full size in the horizontal direction (as indicated at (d)). If this output is projected on a display 3A of the existing ratio of 4 : 3, there is obtained a vertically expanded image (as indicated at (c)) compressed to 3/4 in the horizontal direction. A normal image is obtained if the display 3A has its input unit equipped with a converter to cutting the two sides (as indicated at (f)) or narrow the vertical scanning range (as indicated at (g)). On the other hand, the output of the existing camera 2A is projected, if did so, in a ball shape (as indicated at (a)) on the display 3A, but the two sides cannot be projected because the horizontal field angle is narrow. If this output is projected on the wide aspect ratio display 3B, the image is either horizontally expanded 4/3 times, as indicated at (b), or spherical, as indicated at (e), while having its two sides blanked by the action of the internal converter (Since the wide aspect ratio display 3B will also appear hereinafter, the inclusion of this converter for the input of the signal at 4 : 3 can be premised).

Since the wireless transmission of the wide signal is accompanied by the technical problem, the wide aspect ratio camera or its assembly with the VTR is a precedent in the home use and has a possibility of being spread as a system for making the software of the user himself.

The means for widening the camera horizontally is exemplified by the method using an anamorphic optical system or a optical fiber plate, as disclosed in Japanese Patent Laid-Open No. 61 - 121577, for example.

The above-specified citation discloses the method of widening the existing camera horizontally but not the connections with the VTR and the view finder to be used together when in the imaging operation. Thus, sufficient consideration is not taken to improve the using conveniences by the customer.

Especially in the system matching the wide aspect ratio frame, the interchange between the imaging and recording at the ratio of 4 : 3 has to be made possible while stressing the interchangeability with the existing system so that the troublesome switching may be avoided.

### SUMMARY OF THE INVENTION

An object of the present invention is to provide a camera recording system for a wide aspect ratio TV, which is so usable as to hardly burden a troublesome switching operation upon the customer.

In order to achieve the above-specified object, the structure to be provided by the present invention will be representatively classified Into the following three kinds.

A camera recording system according to one example of the present invention comprises: lens mounts suited for imaging at individual ones of said plural aspect ratios and enabled to be selected and mounted by a user, each of said lens mount being so formally characterized for its identification; a camera unit including a solid-state image sensor having its whole face irradiated at all times with the light coming from the mounted one of said lens mounts; a VTR unit; an electronic view finder for projecting the whole field angle of an image to be recorded, when said VTR unit is stopped or in its recording state, and a playback image, when in a play-back state, and for switching its degree of vertical and horizontal expansions of the displayed image, as viewed from the outside, in response to a logical signal; and means for detecting the existence of the formal feature of said mounted lens mount to generate said logical signal.

If necessary, the camera recording system further comprises: a circuit for adding a signal for identifying the aspect ratio to the recording signal of said VTR unit; and means for generating the logical signal by detecting the added signal when in the play-back to feed it to said electronic view finder.

If necessary, moreover, the camera recording system further comprises: means for increasing the carrier frequency of the recording FM signal of said VTR unit, when in the recording at a new aspect ratio of 16 : 9; and means for discriminating the aspect ratio of the signal on the basis of the carrier frequency, when in the play-back, to generate and feed the logical signal to said electronic view finder.

On the other hand, said solid-state image sensor may be replaced by an image tube having its whole face irradiated at all times with the light coming from said mounted lens mount.

Moreover, said solid-state image sensor may be replaced by a solid-state image sensor having sensors in a number corresponding to that of 625 scanning lines in the vertical direction of the frame, and said sensors are irradiated at all times on their horizontal whole faces with the light coming from said mounted lens mount.

In a second example, the camera recording system comprises: one lens mount equipped with a switch for the user to select which of said plural aspect ratios the imaging is to be performed at; and an image tube having its vertical scanning range of the frame switched in response to the fed logical signal, so that the logical signal generated in accordance with the position of said switch is fed to said image tube and said electronic view finder. The structure of the VTR unit may be similar to that of the aforementioned first example.

In the third example, a camera recording system according to a representative embodiment of the present invention comprises: a switch for a user to select which of the aspect ratio is to be used for the imaging; a lens mount; a solid-state image sensor corresponding to a wider aspect ratio than the existing ratio of 4 : 3; a time expander circuit made receptive of the output of said image sensor for passing it as it is therethrough, in case the user desires the imaging according to said wider aspect ratio than the ex isting ratio of 4 : 3, and for transforming the same into the aspect ratio of 4 : 3 in case the user desires the imaging according to the existing aspect ratio of 4 : 3; a VTR unit for recording and play-back by attaching a characteristic for knowing later which signal the imaging has used; and an electronic view finder corresponding to said wider aspect ratio than the existing ratio of 4 : 3 for projecting the imaged signal when in the stop and the recording operation of said VTR unit, the played-back signal when in the play-back, and the whole field angle at all times without any distortion of the image due to the difference In the aspect ratio.

Like the aforementioned first example, if necessary, the camera recording system further comprises: a circuit for adding a signal for identifying the aspect ratio to the recording signal of said VTR unit; and means for generating the logical signal by detecting the added signal when in the play-back to feed it to said electronic view finder.

If necessary, moreover, the camera recording system further comprises: means for increasing the carrier frequency of the recording FM signal of said VTR unit, when in the recording at a new aspect ratio of 16 : 9; and means for discriminating the aspect ratio of the signal on the basis of the carrier frequency, when in the play-back, to generate and feed the logical signal to said electronic view finder.

In any of the aforementioned first to third examples, said electronic view finder may have a function, if necessary, to indicate which of said plural aspect ratios the image is being performed at.

In case, on the other hand, not the electronic view finder but the optical view finder is used, this view finder may have a function, if necessary, to indicate which of said plural aspect ratios the imaging is being performed at or the field angle for the imaging.

In any case, the VTR unit need not always be disposed in a casing shared with the camera unit and the view finder unit but may be separated therefrom.

In any of the foregoing examples, at least the imaging unit (such as the solid-state image sensor or the image tube) and the view finder may be individually one, and the whole field angle can be observed through the view finder without any distortion of the image during at least the recording operation no matter which aspect ratio might be used for the imaging, thus raising an effect that no abnormal feeling is given to the user.

Moreover, the turn to be required of the user when the aspect ratio is to be changed is only of the interchange of either the lens or the switch, and the remaining switching operations are automated in response to the aforementioned logical signal, so that the usage can be drastically improved.

The possibility of the mistaken use can be reduced in case the aspect ratio for the imaging is indicated in the finder.

In case the solid-state image sensor used corresponds to the 625 scanning lines, it is possible to omit the troubles for developing new elements In the NTSC area.

In case the VTR unit makes it possible to know later which signal is used for the recording (e.g., to add the identification signal or to switch the recording FM frequency), the aspect ratio of the signal can be discriminated when in the play-back. Thus, there can be attained an effect that the switching operation when in the play-back can be automated to improve the usage drastically.

BRIEF DESCRIPTION OF THE DRAWINGS

Fig. 1 is a circuit block diagram showing a first embodiment of the camera recording system according to the present invention;

Fig. 2 is a diagram showing the relations between the aspect ratios of the camera and the aspect ratios of the display;

Figs. 3 and 4 are perspective views showing the imaging portion including the lens system of the embodiment of Fig. 1:

Fig. 5 is a diagram showing the method of generating the logical signals corresponding to the aspect ratios of the embodiment of Fig. 1;

Figs. 6 and 7 are front elevations showing the display units of the electronic view finders in the embodiment of Fig. 1;

Figs. 8 and 9 are circuit block diagrams showing embodiments which are slightly modified from that of Fig. 1;

Fig. 10 is a front elevation showing the solid-state image sensor in case the image unit is modified from the embodiment of Fig. 1;

Fig. 11 is a circuit block diagram showing a second embodiment of the camera recording system according to the present invention;

Fig. 12 presents signal waveform charts for explaining the operations of a time expander circuit 30 of Fig. 15;

Figs. 13 and 14 are front elevations showing the display unit of an electronic view finder of the embodiment of Fig. 15;

Fig. 15 is a circuit block diagram showing a third embodiment of the camera recording system according to the present Invention;

Figs. 16 and 17 are circuit block diagrams showing embodiments which are slightly modified from that of Fig. 15; and

Fig. 18 is a front elevation showing an optical view finder in case this view finder is used in the present invention.

DETAILED DESCRIPTION OF THE PREFERRED EMBODIMENTS

The present invention will be described in the following in connection with the embodiments thereof with reference to the accompanying drawings.

In any of the aforementioned first to third examples, The present invention is directed to a recording system including a camera, a VTR and an electronic view finder. First of all, the imaging portion of the camera of the first example will be described with reference to Fig. 3.

Fig. 3 schematically shows the relations between the lens and image sensor of the camera. Fig. 3(a) shows the case in which the imaging is accomplished at an aspect ratio of 4 : 3 now in use by using a normal spherical lens 4A and an existing solid-state image sensor 5A, and Fig. 3(b) shows the case in which the imaging is accomplished at an aspect ratio of 16 : 9 by using the existing solid-state image sensor 5A in combination of a normal spherical lens 6A and a convex, anamorphic optical lens 7A. The former optical system functions like the existing camera 2A of Fig. 2, and the latter optical system functions like a wide aspect ratio camera 2B of Fig. 2. In other words, the optical system is enabled to match both the existing system and the wide aspect ratio system merely by changing the lens elements. It goes without saying that the anamorphic optical lens 7A may be replaced by the optical fiber plate as disclosed in the aforementioned citation. Although, moreover, Fig. 3 exemplifies a single lens as the optical lens so as to prefer an easy understanding, the lens is actually composed of a plurality of lens elements, and the mount of the lens and the support of the image sensor are omitted.

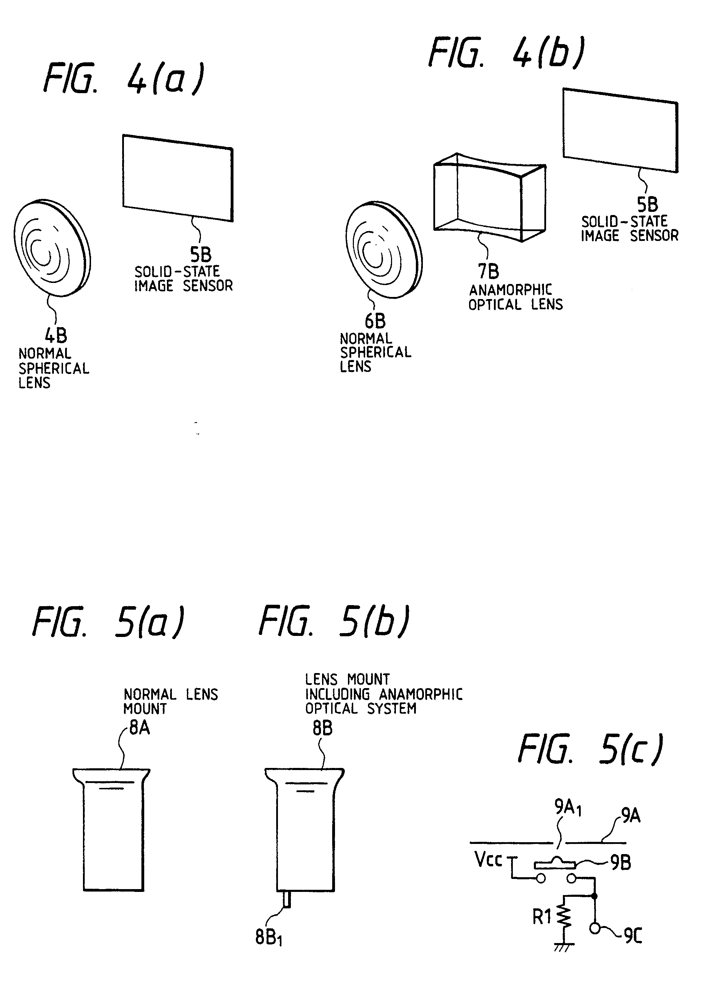

Contrary to Fig. 3, as shown in Fig. 4, the solid-state image sensor 5B may be changed to match the aspect ratio of 16 : 9 so that the imaging can be performed at the ratio of 16 : 9 in the form of Fig. 4(a) and at the ratio of 4 : 3 by using a concave, anamorphic optical lens 7B of Fig. 4(b).

The examples thus far described are premised in any case by using the whole planes of the solid-state image sensors 5A and 5B.

As is now understood from the description thus far made, the customer is required of his turn to select the lens suited for the imaging at the desired aspect ratio. In the present invention, what is required is that turn, and the accompanying switching of the individual portions of the system are to be automated.

For these automations, the lens portion is required of a function to discriminate what lens is mounted.

The following can be conceived as the method of switching and selecting two kinds of lenses.

(1) Interchangeable lens system enabled to have its lenses interchanged (as used in a single lens reflex camera);

(2) System allowing the user to select two kinds of lenses mounted on a rotary ring, by turning the ring (as an objective lens system of a microscope); and

(3) System in which only the anamorphic optical lens, for example, is detachable and is mounted in front or at the back of or in the normal lens system.

Here will be described the aforementioned example of the discriminating mechanism by taking up the case (1), as schematically shown in Fig. 5. There are prepared a lens mount 8A having the normal lens built therein, as shown in Fig. 5(a), and a lens mount 8B including means for changing the aspect ratio such as the anamorphic optical system, as shown in Fig. 5(b), and the discriminating mechanism is mounted in the camera body as in the interchangeable lens system. For example, the latter lens mount 8B is characterized by a signpost such as a projection for discriminations, as indicated at 8B1. On the other hand, as shown in Fig. 5(c), the camera body is formed partially at its casing 9A with a hole 9A1 which is positioned to engage with the aforementioned projection 8B1. A switch 9B is fitted in that hole 9A1. If the lens mount 8A is attached, the logical level at an output terminal 9C is grounded to a Low level through a resistor R1 because the switch 9B is left open. If the lens mount 8B is attached, the switch 9B is pushed and turned on so that the logical level at the output terminal 9C turns High. Thus, which lens is mounted by the customer is discriminated to generate the logical level according to the result, and the operation of the portion requiring the switching, as will be described hereinafter, thus achieving the desired object.

Incidentally, it is quite natural to reverse the logical levels from the aforementioned ones, and the discrimination method may be different from that using the aforementioned projection 8B1. For example, different turning angles can be set for mounting the lens so that the lenses may be discriminated from the angle turned. In short, it is sufficient to provide means for automatically discriminating whether the lens system is normal or anamorphic, so that the result of discrimination may be converted into the electrical, logical level.

Here will be described an example of switching the operations of the individual portions of the recording system by using the logical signals. What is to be switched is the electronic view finder and the VTR. At first, the electronic view finder will be described in the following. This electronic view finder should be one for one system like the foregoing image sensors 5A and 5B and is inconvenient if it is replaced by the customer. Moreover, the electronic view finder is required at the minimum to present the whole field angle of an image to be sensed when in the recording operations and is desired to give no distortion to the image (while preventing a round image from being a vertically or horizontally longer ellipse, as exemplified in Fig. 2). Moreover, it is convenient to indicate the aspect ratio being taken at a portion of the frame (although not always necessary for the recording in the VTR unit).

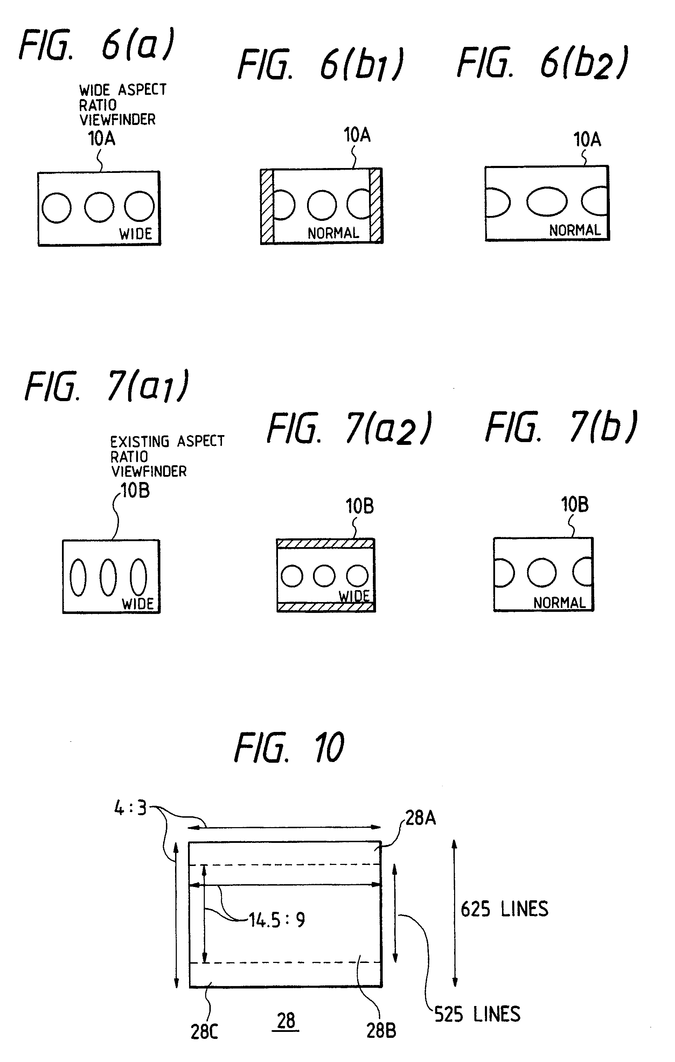

Fig. 6 presents images which are taken in case a wide aspect ratio electronic view finder 10A at a new ratio of 16 : 9 or the like is used. The taking conditions are similar to the foregoing ones of Fig. 2. if there is generated at the output terminal 9C of Fig. 5 a logical signal indicating that a wise aspect ratio lens (including the anamorphic optical lens, for example) is mounted, the electronic view finder 10A displays an indication of "WIDE, 16 : 9", as shown in Fig. 6(a), and the whole field angle to be taken is projected without any distortion (as seen from Fig. 2(d)). in case, on the other hand, the normal lens is mounted, there appears an indication of "NORMAL, 4 : 3", as shown in Fig. 6(b2), but the image projected is horizontally distorted or expanded (as seen from Fig. 2(b)). With this distortion, the minimum function is achieved because the whole field angle to be taken is projected, but the image is desired to eliminate the distortion, if possible, by circuit or optical means. It is advisable, for example, to compress the view to the center by blanking the two sides, as shown in Fig. 6(b1) (as seen from Fig. 2(e)). The method of performing this transformation by the circuit means is specified in our Japanese Patent Application No. Hei 1 - 46514 belonging to the same Applicant.

On the other hand, Fig. 7 shows the case in which the electronic view finder 10B at the existing ratio of 4 : 3 is used. in case the normal lens is mounted, the indication of "NORMAL, 4 : 3" appears, as shown in Fig. 7(b), so that the whole field angle to be taken is projected without any distortion (as seen from Fig. 2(a)). in case, on the other hand, a new wide aspect ratio lens is mounted, the indication of "WIDE, 16 : 9" appears, as shown in Fig. 7(a1), but what is projected is a vertically expanded image (as seen from Fig. 2(c)). With this, the minimum function is performed, but the image is desired to eliminate the distortion, if possible, by the circuit or optical means. it is advisable, for example, to narrow the vertical scanning width, as shown in Fig. 7(a2), thereby to establish blanks at the upper and lower portions (as seen from Fig. 2-(g)). Incidentally, the method of eliminating the two ends to expand the central portion, as shown in Fig. 2(f), is not permitted at least in the recording operation in the case of the electronic view finder. This is because the whole field angle to be recorded cannot be observed.

The description thus far described is direction to the case in which the VTR unit is in its stopped or recording state, and the play-back image of the VTR is ordinarily projected in the electronic view finder when in the play-back operation. This projection aims mainly at confirming whether or not the image content has been recorded without any trouble, and it is not always necessary to project the whole field angle. Nor arises a fatal trouble even if the image is distorted vertically or horizontally. However, it is preferable to project, if possible, the whole field angle without any distortion. For this, the discrimination signal of the aspect ratio may be superposed on the recording signal of the VTR when in the recording operation, and the aspect ratio may be discrlminated from the play-back signal when in the playback operation so that the result may be sent as the logical signal in place of the signal from the output terminal 9c of Fig. 5 to the electronic view finder. Incidentally, that discrimination signal can also be used, if outputted to the outside, for discriminating the aspect ratio in the external display.

Next, the VTR unit will be described in the following. in the imaging case using the normal lens (at the aspect ratio of 4 : 3), it goes without saying that the VTR may operate in accordance with the standards of the existing VHS (including the S-VHS) and the 8 mm Video (including the high band 8 mm Video). in the imaging case using the wide aspect ratio lens (having the aspect ratio of 16 : 9, for example), similar operations perform the basic functions but under slightly different circumstances. The wide aspect ratio signal scans a length of 4/3 times, for example, horizontally for the same horizontal scanning period as that of the existing signal. On principle, therefore, the frequency band of the signal is increased to the 4/3 times so that the signal of the wider range has to be transmitted for the same resolution. in case the solid-state image sensor is used as in the foregoing embodiment such that the whole surface of the sensor is used, the band is determined to raise no serious problem because it is generally determined in dependence upon the number of sensors corresponding to the picture elements on the sensor irrespective of the aspect ratio. However, the band is widened for the image tube. if it is intended to hold the same resolution, the carrier frequency of the luminance FM signal of the VTR has to be increased. if then, there arises a contradiction that the interchangeability with the existing system is lost in the VTR.

It is not intended in the present invention that the aspect ratio of the signal of the image taken and the standards of the records of the VTR are uniquely determined. Generally speaking, however, in case the solid-state image sensors are used, as in the foregoing examples, such that their whole faces are always used irrespective of the aspect ratio, the band is little extended. in either case, therefore, it is advisable to keep the interchangeability with the existing system by recording in conformity with the existing standards of the VTR. in case the later-described image tubes are to be used, on the other hand, the selection between the change in the VTR standards for holding the resolutions and no change for stressing the interchangeability is accomplished in accordance with the social conditions.

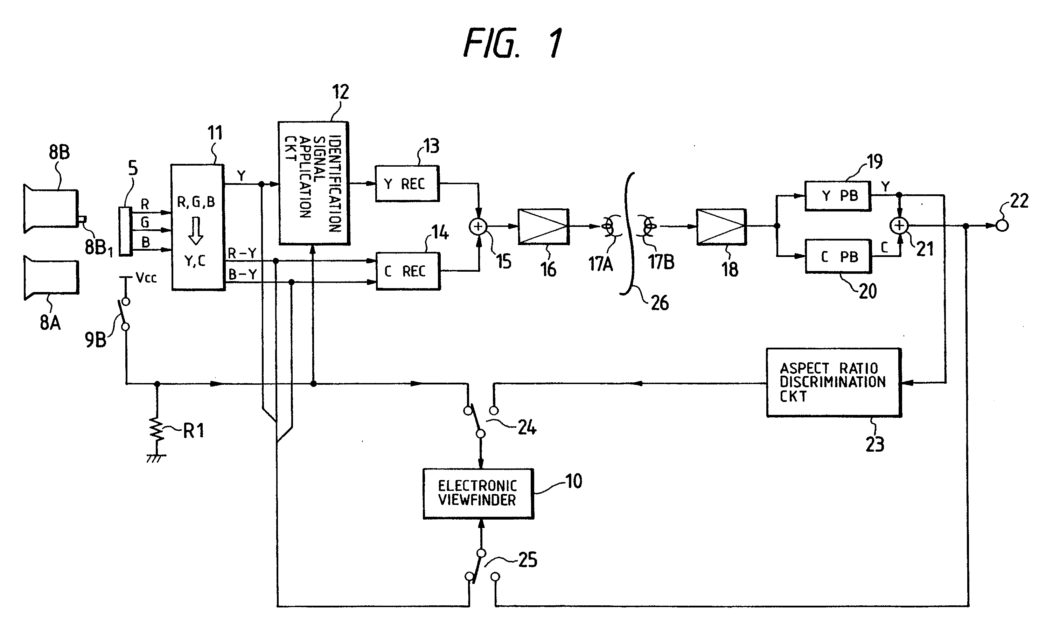

One embodiment of the whole recording system adopting the aforementioned items according to the present invention is shown in Fig. 1. Fig. 1 is a circuit diagram showing the whole recording system including the camera, the VTR and the electronic view finder. Although all of these elements need not be built in one casing, it is ordinary that at least the camera and the electronic view finder are united in one body.

The reference characters 8A and 8B designate the lens mounts shown in Fig. 5, and the lens mount 8B including the anamorphic optical system, for example, is equipped with the projection 8B1 for the identification. The lens mount 8A or 8B is selected and attached to the body by the customer. if the lens mount 8B is attached, the switch 9B shown in Fig. 5 is closed by the projection 8B1 so that the logical signal at the High level is applied to one terminal of each of an identification signal application circuit 12 and a switch 24. if the lens mount 8A is attached, the logical signal at the Low level is applied to the terminal of each of the circuit 12 and the switch 24. The switch 24 and a later-described switch 25 are connected in the shown direction, when in the recording operation of the VTR unit, but in the opposite direction when in the play-back. As a result, in the former case, the logical signal is guided to an electronic view finder 10.

First of all, the recording operations will be described in the following. The RGB signal (or its complementary color signal) or the output of a solid-state image sensor 5 is transformed into a luminance (Y) signal and two color difference (C) signals by a luminance (Y) and color difference (C) transformer 11. These signals are projected at their whole field angle in the electronic view finder 10 (although only the luminance (Y) signal may naturally be sent if the electronic view finder 10 is dichroic). Here, the whole frame can be projected without any distortion because the aforementioned logic signal is connected to the electronic view finder 10 through the switch 24). On the other hand, the aforementioned luminance (Y) signal is inputted to the identification signal application circuit 12, too. Here, in the case of the wide aspect ratio signal (as known from the aforementioned logical signal), a pulse or a burst identification signal is added during the scan blanking period (as will be used for the play-back). After this, the luminance (Y) signal is transformed into the FM signal conforming to the VTR standards by a Y-signal recording processor circuit 13 and is applied to one terminal of an adder 15. The aforementioned two color difference signals are are subjected to orthogonal two-phase modulations in the case of the VHS or the VTR with the subcarriers of 0.629 MHz (or with the subcarriers of 3.58 MHz conforming to the NTSC standards and then are transformed to a lower range of 0.629 MHz) until they are applied to the remaining one terminal of the adder 15. The output of this adder 15 is recorded in a magnetic tape 26 through a recording amplifier 16 and a recording head 17A.

At the time of play-back, the switches 24 and 25 are switched in the directions, as opposed to the shown ones. At first, signals are read out of the magnetic tape 26 by a play-back head 17B (which may be identical to that 17A) and are amplified by a play-back amplifier 18. After this, the Y-signals are FM-modulated by a Y-signal play-back processor circuit 19 so that the C-signals having their subcarrier frequency transformed to 3.58 MHz are obtained by a C-signal play-back play-back processor circuit 20 in the case of the NTSC. The C-signals are added by a two-ways adder 21 and sent from an output terminal 22 to an external display (although not necessarily connected). On the other hand, this play-back signal is sent through the switch 25 to the electronic view finder 10, too, to make the recording confirmation possible. On the other hand, an aspect ratio discrimination cir cuit 23 detects whether or not the identification signal has been added by the identification signal adder 12, to discriminate the aspect ratio of the signal and send the result as the logical signal (which takes the High level in this case in response to the wide aspect ratio signal) to the electronic view finder 10 through the switch 24. Thus, the whole field angle can be monitored without any distortion even at the time of play-back.

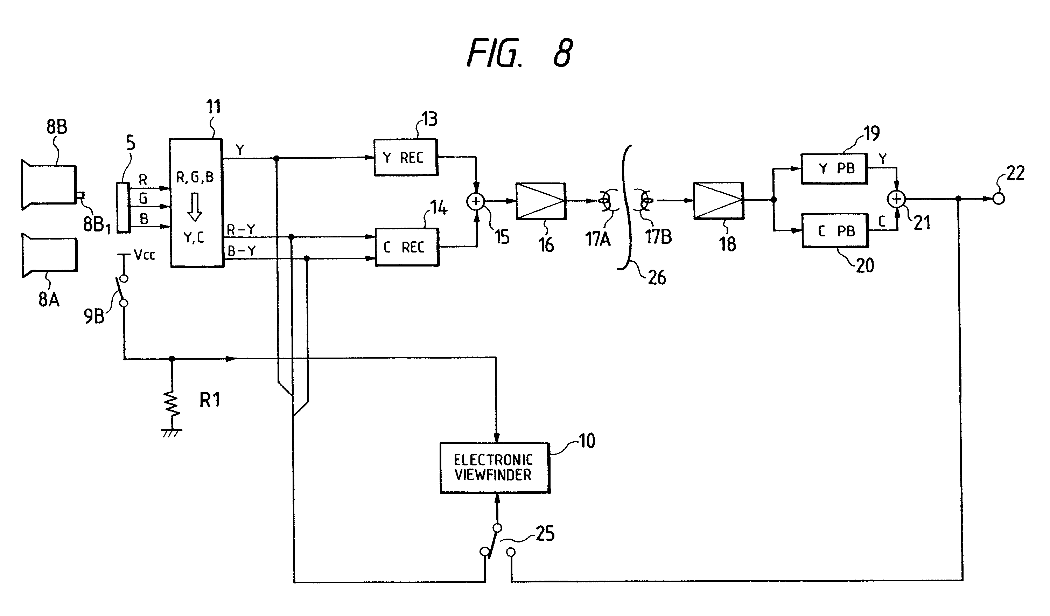

Next, here will be described an example which is slightly modified within the range of the gist from the embodiment of Fig. 1. This example is shown in Fig. 8. The monitor image in the electronic view finder 10 at the time of the play-back need not always be corrected of its distortion because it is used merely for confirming the propriety of the recording. In this case, the structure can be simplified, as shown in Fig. 8, by eliminating the switch 24, the identification signal adder 12 and the aspect ratio discrimination circuit 23 from the structure of Fig. 1.

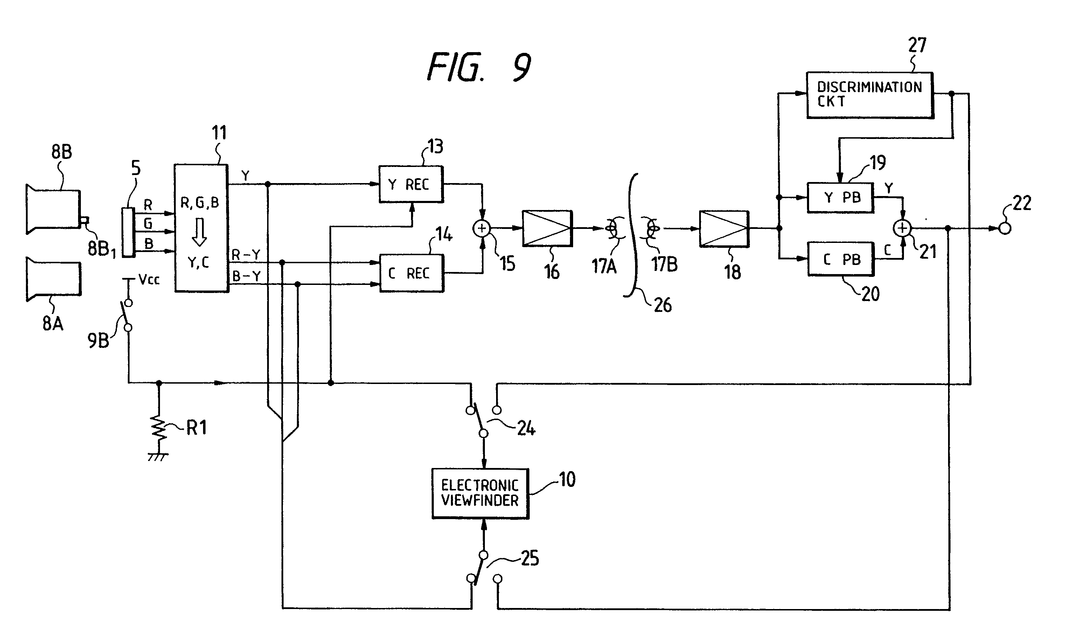

Another example is shown in Fig. 9. in case a wide aspect ratio signal is to be recorded, as has been described hereinbefore, the logical signal generated by the switch 9B is also connected with a Y- Signal recording processor circuit 13 in case the carrier frequency of the luminance FM signal is to be increased while ignoring the interchangeability with the existing VTR, and the carrier frequency is raised in the wide aspect ratio signal. Since, in this case, the circuit characteristics at the time of play-back have to be switched in response to the signal, a discrimination circuit 27 is provided so that the signal (which takes the High level at the time of the wide aspect ratio signal) may be discriminated in its kind from the frequency of the play-back FM signal and sent to the Y-signal play-back processor circuit 19. Since, moreover, this discrimination result expresses the aspect ratio, the logical signal may be sent to the switch 24 so that the identification signal adder 12 and the aspect ratio discrimination circuit 23 of Fig. 1 can be omitted. Incidentally, it is desirable that the input to the discrimination circuit 27 be extracted as much as possible from the near of the output of the play-back amplifier 18. The requisites for this structure are detailed our Japanese Patent Laid-Open No. 63 - 253781. This Laid-Open describes the method of discriminating the VHS standards and the S-VHS standards, although the essentials are identical.

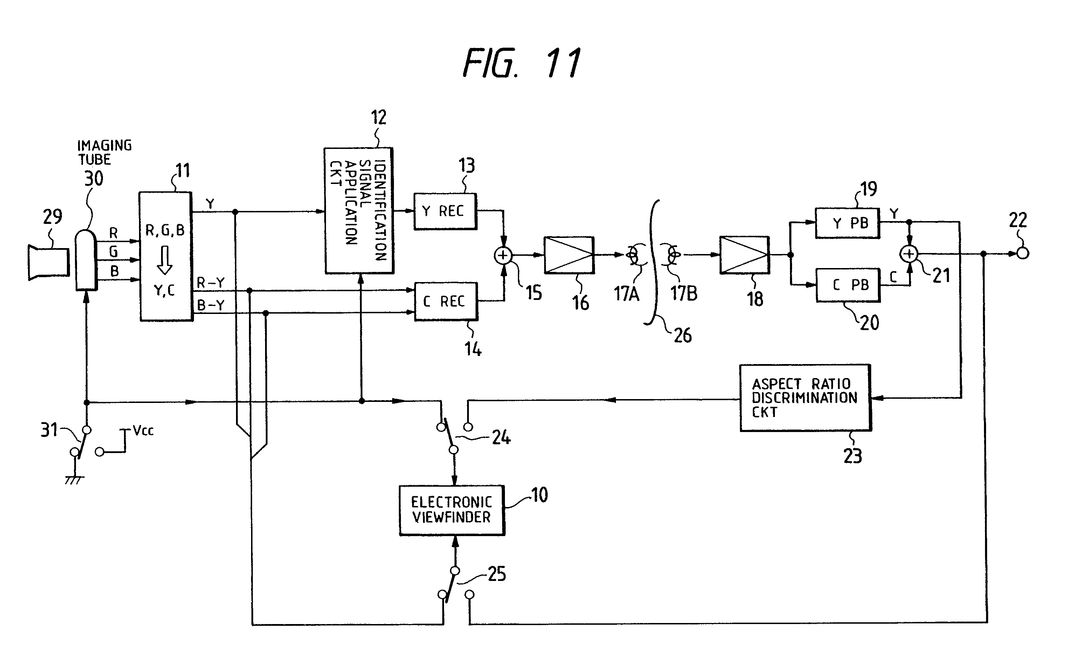

In Fig. 1, the whole face of the solid-state image sensor is used at all times for imaging the wide aspect ratio frame, by using the anamorphic optical system. This example will be described with reference to Fig. 10.

A PAL type solid-state image sensor 28 having the existing aspect ratio of 4 : 3 has about 625 sensors arranged vertically while corresponding to the number of its scanning lines. In the NTSC areas in Japan or U.S.A., the signals are read out by using about 525 lines at the center portion 28B of that image sensor, but the signals at upper and lower end portions 28A and 28C are not read out. Then, wide aspect ratio signals at 14.5 : 9 can be substantially obtained. Although this ratio is slightly short as compared with the ratio of 36 : 9, there arises no practical problem, but that ratio can be said sufficient if the standards of the wide aspect ratio are 5 : 3, 14 : 9 and so on. Another advantage is that any new element need not be developed.

That element 28 may be replaced by the image sensor 5 in case it is used as shown in Fig. 1, for example. Moreover, a lens having the anamorphic optical system or the like may be used in either the wide aspect ratio frame or the existing frame.

Next, the aforementioned second example will be described in the following.

In this case, the image tube is used in place of the solid-state image sensor. The circumstances are more or less different because the image tube does not have a separate sensor for each picture element.

At first, premising the use of two kinds of lenses like the aforementioned example, the image sensor 5 of Fig. 1 may be merely replaced by the image tube in case the horizontal and vertical scanning ranges of the image tube are not switched.

In the case of the image tube, however, the plural aspect ratios can be matched not by using the lenses separately but by switching the scanning range of the vertical direction (although this matching cannot be attained because the solid-state image sensor has sensors in the vertical direction in a number corresponding to that of the scanning lines). Specifically, the scanning range in the vertical direction may be narrowed for the ratio of 16 : 9 to 3/4 times as large as that for the ratio of 4 : 3. Since it is premised that one lens matches the two aspect ratios, the method of switching the view finder or the like has to be changed from that of the case of Fig. 1. One embodiment of this case is shown in Fig. 11.

In Fig. 11, only one lens as designated at numeral 29 is made to match the two aspect ratios, and an electrical, logical signal is guided to a image tube 30 to inform which aspect ratio the customer desires to take the image at, so that the vertical scanning range is switched in accordance with the level of the logical signal. This logical signal cannot be detected and generated any more by the lens unit so that it is generated by the customer's switching a bistable switch 31 attached to the casing of the system in accordance with the desired aspect ratio. Specifically, the turn of the customer in Fig. 1 is to interchange the lenses but to switch the switch 31 in Fig. 11. Similar modifications could naturally be made in the embodiments of Figs. 8 and 9.

Next, the aforementioned third example will be described in the following.

Like the aforementioned second example, the optical system (i.e., lens) of the camera is not switched. Upon selection of which is to be used for the imaging, the turn required of the user is limited to the operation of the switch attached to the casing so that the operations may not be complicated by automating all the accompanying switchings.

The imaging portion of the camera has the field angle corresponding to the aspect ratio of 16 : 9. In the imaging case at the aspect ratio of 16 : 9, the signals may be outputted as they are. in the imaging case at the ratio of 4 : 3, however, the field angle is narrowed in the horizontal direction. This is exemplified by the following two methods.

(1) The horizontal scanning width of the imaging portion is narrowed.

(2) After the output has been extracted at the ratio of 16 : 9, the field angle of the center portion 3/4 in the horizontal direction is expanded on a time axis to 4/3 times to eliminate the side portions (although the horizontal scanning period should not be changed).

The method (1) is relatively feasible in the case of the image tube. For use with the solid-state image sensor such as the CCD or MOS in the major stream, however, the method (1) is possible on principle, but the structure of the signal read-out control unit is so excessively complicated that it is not practical.

The method (2) can be easily realized although it requires a line memory.

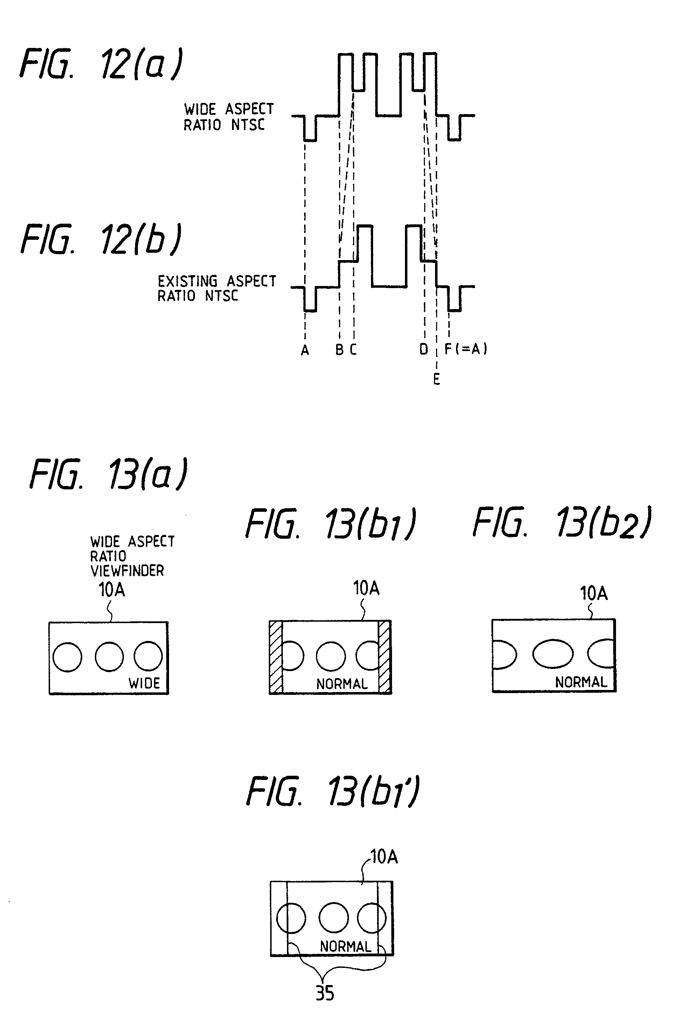

In the present invention, the image sensor is read out at the ratio of 16 : 9 no matter which of the aspect ratio of 16 : 9 or 4 : 3 might be used for the imaging. The operation of the expander circuit at the downstream stage is switched to select whether the output is made either by changing the system to the ratio of 4 : 3 or as it is at the aspect ratio 16 : 9. The operations of the expander circuit are illustrated in the waveform charts of Fig. 12.

In Fig. 12, the output of the image sensor is indicated at (a). This output is assumed to be the signal having the aspect ratio of 16 : 9. The output may be left as it is for the imaging at the aspect ratio of 16 : 9. For the imaging at the aspect ratio of 4 : 3, however, the output is transformed, as indicated at (b) in Fig. 12. Specifically, the arrows A → B and E → F (= A) are the horizontal blanking period so that the output is made without being expanded. The arrows B → C and D → E at (a) in Fig. 12 are the horizontal side portions to be expanded at the wider aspect ratio and are eliminated by stopping the feed of the write clock to the memory. Since the arrow C → D at (a) in Fig. 12 is a portion coincident to the field angle at the ratio of 4 : 3, it is written in the memory with the clock of a certain frequency and is read out with the clock of a frequency of 3/4 times so that the time axis is expanded 4/3 times to come into the initial period B → E. Thus, the change can be made to the existing aspect ratio. A more specific description is made in our Japanese Patent Application No. Hei 1 - 46514.

Naturally, whether or not the time axis processing is to be accomplished is determined in accordance with the logical signal which is generated in association with the aforementioned switching of the user.

Fig. 13 shows an image in case the electronic view finder 10A for the new wide aspect ratio of 16 : 9 is used. The imaging conditions are set similar to the foregoing ones of Fig. 2. if the user makes the selection of the imaging at the wide aspect ratio, there appears in the electronic view finder 10A the display of "WIDE, 16 : 9", as shown in Fig. 13(a), so that the whole field angle to be taken is projected without any distortion (as indicated in Fig. 2(d)). in case the normal NTSC is selected, on the other hand, the circumstances are different in dependence upon where the input of the electronic view finder is taken from. if the input is taken directly from the image sensor, it is always the signal at the ratio of 16 : 9 so that a horizontally wider field angle than the actually taken range is projected to raise the erroneous operations. Therefore, the "NORMAL, 4 : 3" is displayed, as shown in Fig. 13(b₁), and the two side portions left actually untaken are blanked. Alternatively, lines 35 indicating the field angle are pro jected, as shown at Fig. 13(b₁'). if, on the other hand, the input of the electronic view finder is extracted from the downstream state of the foregoing expander circuit, the image projected is horizontally distorted, as shown in Fig. 13(b₂) (as seen from Fig. 2(b)). With this distortion, the minimum function is achieved because the whole field angle to be taken is projected, but the image is desired to eliminate the distortion, if possible. It is advisable, for example, to compress the view to the center by blanking the two sides, as shown in Fig. 13(b1) (as seen from Fig. 2(e)). The method of performing this transformation by the circuit means is specified in our Japanese Patent Application No. Hei 1 - 46514 belonging to the same Applicant.

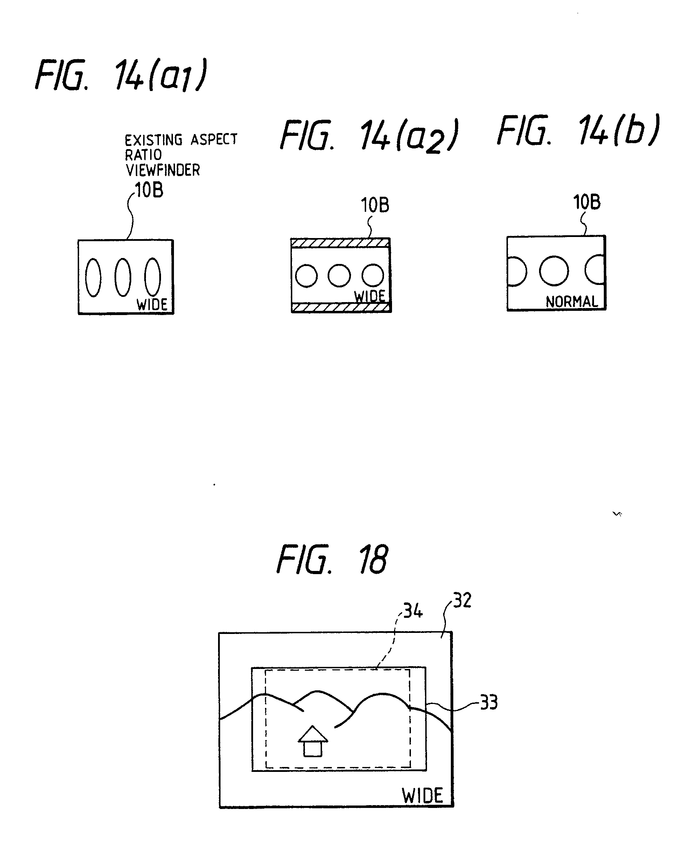

On the other hand, Fig. 14 shows the case in which the electronic view finder 10B at the existing ratio of 4 : 3 is used. Let the case be considered, in which the input of the electronic view finder is extracted from the downstream state of the aforementioned expander circuit. if the user selects the imaging at the existing ratio of 4 : 3, the indication of "NORMAL, 4 : 3" appears, as shown in Fig. 14-(b), so that the whole field angle to be taken is projected without any distortion (as seen from Fig. 2(a)). if case, on the other hand, the imaging at the aspect ratio of 16 : 9, is selected, the indication of "WIDE, 16 : 9" appears, as shown in Fig. 14(a1), but what is projected is a vertically expanded image (as seen from Fig. 2(c)). With this, the minimum function is performed, but the image is desired to eliminate the distortion, if possible. It is advisable, for example, to narrow the vertical scanning width, as shown in Fig. 14(a2), thereby to establish blanks at the upper and lower portions (as seen from Fig. 2(g)). Incidentally, the method of eliminating the two ends to expand the central portion, as shown in Fig. 2(f), is not permitted at least in the recording operation in the case of the electronic view finder. This is because the whole field angle to be recorded cannot be observed. incidentally, the method of extracting the input of the view finder at all times from the output of the image sensor for generating the output of the aspect ratio of 16 : 9 is not practical in this case. This is because it is unreasonable that the input signal and the view finder always have different aspect ratios.

As has been described hereInbefore, a variety of countermeasures are necessary in dependence upon the aspect ratio and the manner to take the input signal. The simplest method is to use the electronic view finder matching the aspect ratio (at 16 : 9) and to input the signal of the output (upstream of the expander circuit) of the image sensor. in the following embodiment, therefore, the major description is devoted to this selection.

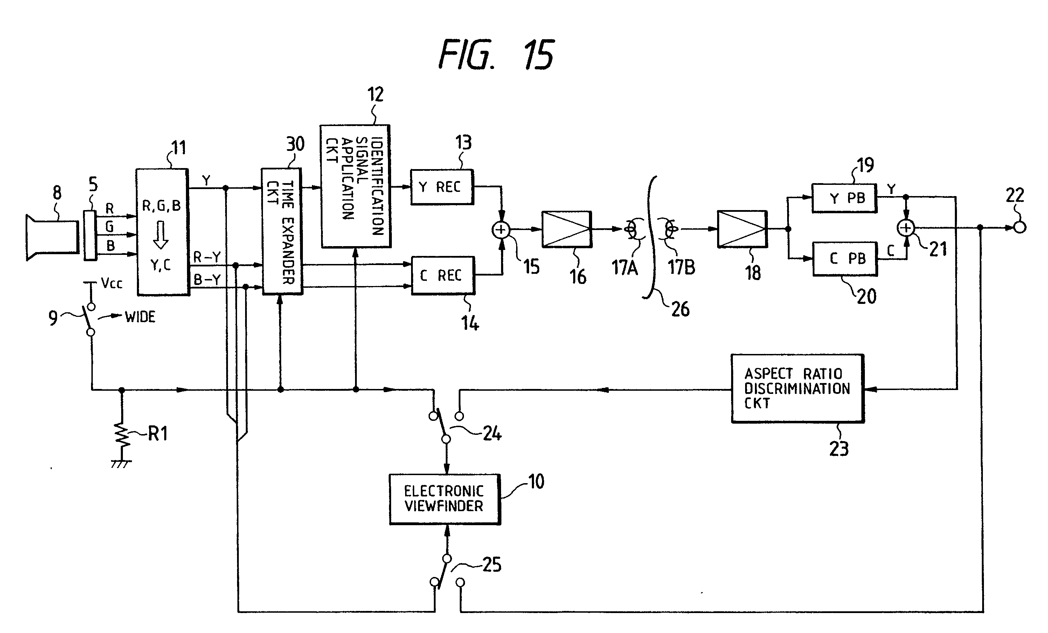

One embodiment of the whole recording system adopting the aforementioned items according to the present invention is shown in Fig. 15. Fig. 15 is a circuit diagram showing the whole recording system including the camera, the VTR and the electronic view finder. Although all of these elements need not be built in one casing, it is ordinary that at least the camera and the electronic view finder are united in one body.

In Fig. 15, reference numeral 9 designates a switch to be operated by the operator. This switch 9 is opened, if the imaging at the aspect ratio of 4 : 3 is selected, to generate a logical signal at the Low level through a resistor $R_1$ and is closed, if the imaging operation at the aspect ratio of 16 : 9 is selected, to generate a logical signal at the High level from the power source. This logical signal is used to automate the necessary switching.

Numeral 10 designates the electronic view finder which is exemplified at first by the wide aspect ratio type (10A), as shown in Fig. 13.

Switches 24 and 25 are connected in the shown directions, when in the stop or recording operation of the VTR unit, and in the opposite directions when in the play-back.

First of all, the recording operations will be described in the following. The light having passed through the lens mount 8 is focused to form an optical image in the solid-state image sensor 5, which then produces a corresponding RGB signal or its complementary color signal at its output. These signals are projected at their whole field angle in the electronic view finder 10 (although only the luminance (Y) signal may naturally be sent if the electronic view finder 10 is dichroic). Here, the aforementioned logic signal is connected to the electronic view finder 10 through the switch 24). If the logical signal is High, the whole field angle may be projected as it is (as shown at (a) in Fig. 13). In the Low level, however, the portions left unimaged and unrecorded are blanked, as shown at (b₁) in Fig. 13, or the lines 35 indicating the field angle are projected together, as shown at (b₁') in Fig. 13.

The output of the Y-Signal color difference transformation circuit 11 is further applied to the time expander circuit 30. This expander circuit 30 is also connected with the aforementioned logical signal. The logical signal is passed as it is without any expansion, if it is High, but is transformed into the ratio of 4 : 3, if it is Low, by the expansion shown in Fig. 12. Next, the output Y-signal is inputted to the identification signal application circuit 12, too. Here, in the case of the signal of the aspect ratio of 16 : 9 (as known from the aforementioned logical signal), a pulse or a burst identification signal is added during the scan blanking period (as will be used for the play-back). After this, the luminance (Y) signal is transformed into the FM signal conforming to the VTR standards by a Y-signal recording processor circuit 13 and is applied to one terminal of an adder 15. The aforementioned two color difference signals are are subjected to orthogonal two-phase modulations in the case of the VHS or the VTR with the subcarriers of 0.629 MHz (or with the subcarriers of 3.58 MHz conforming to the NTSC standards and then are transformed to a lower range of 0.629 MHz) until they are applied to the remaining one terminal of the adder 15. The output of this adder 15 is recorded in a magnetic tape 26 through a recording amplifier 16 and a recording head 17A.

At the time of play-back, the switches 24 and 25 are switched in the directions, as opposed to the shown ones. At first, signals are read out of the magnetic tape 26 by a play-back head 17B (which may be identical to that 17A) and are amplified by a play-back amplifier 18. After this, the Y-signals are FM-modulated by a Y-signal play-back processor circuit 19 so that the C-signals having their subcarrier frequency transformed to 3.58 MHz are obtained by a C-signal play-back play-back processor circuit 20 in the case of the NTSC. The C-signals are added by a two-ways adder 21 and sent from an output terminal 22 to an external display (although not necessarily connected). On the other hand, this play-back signal is sent through the switch 25 to the electronic view finder 10, too, to make the recording confirmation possible. On the other hand, an aspect ratio discrimination circuit 23 detects whether or not the identification signal has been added by the identification signal adder 12, to discriminate the aspect ratio of the signal and send the result as the logical signal (which takes the High level in this case in response to the aspect ratio of 16 : 9) to the electronic view finder 10 through the switch 24. The logical signal may be pro jected as it is, if it is High, and may have the two sides blanked, if it is Low, as shown at $(b_1)$ in Fig. 13, because it is distorted, as shown at $(b_2)$ in Fig. 13.

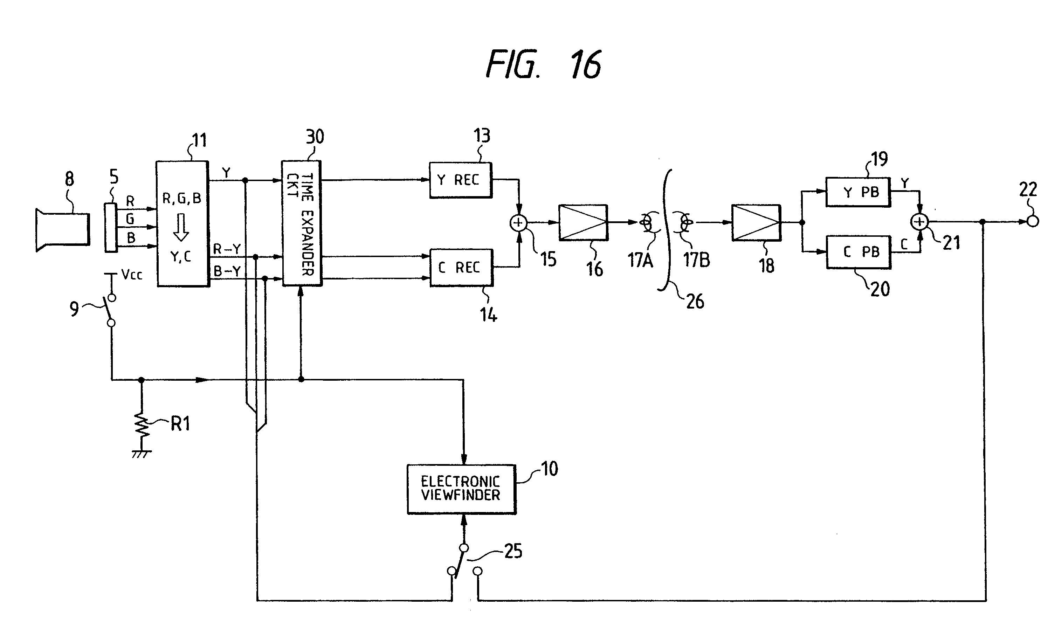

Next, here will be described an example which is slightly modified within the range of the gist of the present invention from the embodiment of Fig. 15. This example is shown in Fig. 16. The monitor image in the electronic view finder 10 at the time of the play-back need not always be corrected of its distortion because it is used merely for confirming the propriety of the recording. In this case, the structure can be simplified, as shown in Fig. 16, by eliminating the switch 24, the identification signal adder 12 and the aspect ratio discrimination circuit 23 from the structure of Fig. 15.

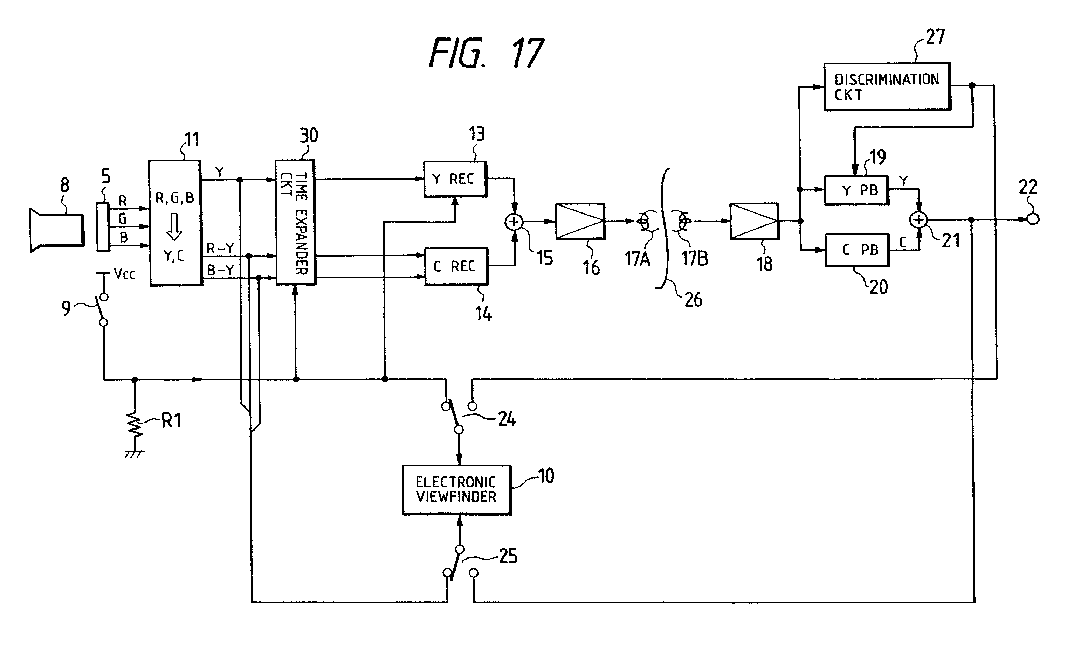

Another example is shown in Fig. 17. In case the signal of the aspect ratio of 16 : 9 is to be recorded, as has been described hereinbefore, the logical signal generated by the switch 98 is also connected with a Y-Signal recording processor circuit 13 in case. the carrier frequency of the luminance FM signal is to be increased while ignoring the interchangeability with the existing VTR, and the carrier frequency is raised in the signal of the ratio of 16 : 9. Since, in this case, the circuit characteristics at the time of play-back have to be switched in response to the signal, a discrimination circuit 27 is provided so that the signal (which takes the High level at the time of signal of the ratio of 16 : 9) may be discriminated in its kind from the frequency of the playback FM signal and sent to the Y-signal play-back processor circuit 19. Since, moreover, this discrimination result expresses the aspect ratio, the logical signal may be sent to the switch 24 so that the identification signal adder 12 and the aspect ratio discrimination circuit 23 of Fig. 15 can be omitted.

As an example slightly different from the aforementioned one of Fig. 15, it is conceivable to extract the input to the electronic view finder from the downstream of the time expander circuit 30. In this case, a distorted image is projected, as shown at $(b2)$ in Fig. 13, without any operation if the logical signal is Low (at the aspect ratio of 4 : 3) when in the imaging and recording operations. It is, therefore, advisable to blank the two sides, as shown at $(b1)$ in Fig. 13. This advice is similar to the operation in the play-back.

In case, on the other hand, the electronic view finder has the aspect ratio of 4 : 3 (as of 10B of Fig. 14) corresponding to the existing NTSC, the signal may be extracted from the downstream stage of the time expander circuit 30 and may also be projected, as shown at $(a_2)$ and (b) in Fig. 14, in response to the aforementioned logical signal.

Next, the view finder has been premised by the electronic view finder but may be exemplified by an optical one in any of the first to third examples.

First of all, the case of the TTL (Through The Lens) type, in which the optical beam having passed through the lens for the imaging itself, will be described in the following.

In case the lenses are interchanged according to the aspect ratio as in the aforementioned first example, there arises no problem because the optical field angle is changed. As shown in the electronic view finder of Fig. 6 or the like, it is convenient to observe the indication of "WIDE" or "NORMAL" in the finder. Since the lenses are not interchanged in the aforementioned second and third examples, however, the indication of the field angle in the finder is necessary because the optical field angle is not changed. For example, there is a method in which lines 33 and 34 indicating the field angles at the two aspect ratios are displayed, as shown in a TTL finder 32 of Fig. 18, so that the used aspect may be discriminated, or in which the indication in letters is also observed.

Since, moreover, the field angle is unvaried in any case of the optical type of other than the TTL type, the display as shown in Fig. 18 is always necessary.

In the description thus far made, the aspect ratio of the wide aspect ratio signal is at 16 : 9 in many cases, but the aspect ratio generally of m : n (m/n > 4/3) would be within the applicable range of the present invention. Various cases of 5 : 3, 14 : 9, 17 : 9 and so on could be conceived.

Moreover, the two signals of 16 : 9 and 4 : 3 naturally appear at the output terminal 22 of the signal to the external display, as shown in Fig. 1. When the aforementioned ratio is not equal to the aspect ratio of the external display, what is projected on the display is an image which is vertically or horizontally expanded. The transformation method of eliminating this distortion is detailed in the foregoing Japanese Patent Application No. Hei 1 - 46514. Here, the logical signal indicating the aforementioned aspect ratio can be used and may be outputted to the outside.

As has been described hereinbefore, the present invention can be applied to the system in which the camera unit and the view finder unit (both belonging to the camera system) and the VTR unit are separated in the different casings. The present invention can also be applied to the case in which the camera unit -view finder unit and the recording function unit of the VTR are confined in one casing whereas the play-back function unit is confined in another casing.

The present invention can be applied further to the case, in which both the NTSC signal at the aspect ratio of 4 : 3 and the Hi-Vision signal at the aspect ratio of 16 : 9 are switched and used together in a common system, and the case in which the PAL signal or D2-MAC signal at the aspect ratio of 4 : 3 and the Wide-MAC signal or the HD-MAC signal at the aspect ratio of 16 : 9 are switched and used together.

In the recording system having the camera, the VTR and the view finder, according to the present invention thus far described, the turn required of the customer can be limited to only either the interchange of the lenses or the switching operation, either in case both the imagings at the existing aspect ratio and the new wide aspect ratio can be accomplished or no matter type the camera and the view finder might take. This results in an effect that a system of excellent using convenience can be constructed without requiring the troublesome operations of the customer.

The present invention can be practiced in modes other than that of the aforementioned embodiments without departing from its spirit or major features. Hence, the aforementioned embodiments merely exemplify the present invention in all the points and should not be interpreted as limitative thereto. The scope of the present invention is defined by the claims. Moreover, the modifications and changes belonging to the equivalents of the claims are all within the scope of the present invention.

## Claims

1. A recording camera system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording; and a view finder unit capable of monitoring an image,
wherein the improvement comprises:

(a) lens mounts including: either separate components, one of which is used for imaging at one of said aspect ratios and the other of which is used for imaging at the other aspect ratio so that one of them may be selected for use by a user; or one component for imaging at one of said aspect ratios and another component made detachable with respect to the former component and having its aspect ratio changed for imaging at the other aspect ratio;

(b) an image sensor adapted to be irradiated with the light from said lens mounts to convert it into an electric signal no matter which of said aspect ratios might be used for the imaging by said lens mounts;

(c) a luminance color difference transformation cir cuit for transforming the output signal of said image sensor into a luminance signal and two color difference signals;

(d) a luminance signal recording processor circuit for transforming the output luminance signal of said luminance color difference transformation circuit into an FM signal determined in conformity to the VTR recording standards;

(e) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(f) an adder for adding the FM signal, i.e., the output of said luminance signal recording processor circuit and the subcarrier orthogonal two-phase modulation signal, i.e., the output of said chromaticity signal recording processor circuit;

(g) a recording amplifier for amplifying the output of said adder;

(h) a video head for recording the output of said recording amplifier in a recording medium;

(i) means for discriminating the aspect ratio at an imaging unit, adapted to discriminate the aspect ratio of an image being taken at said lens mounts to output the result as a logical signal; and

(j) an electronic view finder for projecting the whole field angle of the image to be recorded in said VTR unit, to switch the degree of vertical or horizontal expansion of its displayed image, as observed from the outside of the system, in accordance with the level of said logical signal.

2. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording and playing-back; and a view finder unit capable of monitoring an image,

wherein the improvement comprises:

(a) lens mounts including: either separate compc nents, one of which is used for imaging at one of said aspect ratios and the other of which is used for imaging at the other aspect ratio so that one of them may be selected for use by a user; or one component for imaging at one of said aspect ratios and another component made detachable with respect to the former component and having its aspect ratio changed for imaging at the other aspect ratio;

(b) an image sensor adapted to be irradiated with the light from said lens mounts to convert it into an electric signal no matter which of said aspect ratios might be used for the imaging by said lens mounts;

(c) a luminance color difference transformation circuit for transforming the output signal of said image sensor into a luminance signal and two color difference signals;

(d) a luminance signal recording processor circuit for transforming the output luminance signal of said luminance color difference transformation circuit into an FM signal determined in conformity to the VTR recording standards;

(e) a chromaticity signal reccrding processor circuit adapted to transform the two color difference signals, i.e., the output of said luminance color difference transformation circuit either into a subcarrier or thogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(f) an adder for adding the FM signal, i.e., the output of said luminance signal recording processor circuit and the subcarrier orthogonal two-phase modulation signal, i.e., the output of said chromaticity signal recording processor circuit;

(g) a recording amplifier for amplifying the output of said adder;

(h) a video head made receptive of the output of said recording amplifier for recording it in a recording medium, when said VTR unit is in the recording state, and for playing back the signal from said recording medium when said VTR unit is in the play-back state;

(i) a play-back amplifier for amplifying the play-back signal output of said video head;

(j) a luminance signal play-back processcr circuit made receptive of the output of said play-back amplifier for demodulating the FM signal;

(k) a chromaticity signal play-back processor circuit made receptive of the output of said play-back amplifier for frequency-transforming the subcarrier orthogonal two-phase modulation signal of two color difference signals determined in conformity to the VTR recording standards into the subcarrier orthogonal two-phase modulation signal determined in conformity to the TV standards;

( l ) means for discriminating the aspect ratio at an imaging unit, adapted to discriminate the aspect ratio of an image being taken at said lens mounts to output the result as a logical signal; and

(m) an electronic view finder for projecting the whole field angle of the image to be recorded, when said VTR unit is in the stopped or recording state, to switch the degree of vertical or horizontal expansion of its displayed image, as observed from the outside of the system, in accordance with the level of said logical signal; and

(n) a switching circuit for switching at least the input signal to said luminance signal recording processor circuit, when said VTR unit is in the stopped or recording state, and at least the output signal of said luminance signal play-back processor circuit when the same is in the play-back state.

3. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording and playing-back; and a view finder unit capable of monitoring an image,
wherein the improvement comprises:

(a) lens mounts including: either separate components, one of which is used for imaging at one of said aspect ratios and the other of which is used for imaging at the other aspect ratio so that one of them may be selected for use by a user; or one component for imaging at one of said aspect ratios and another component made detachable with respect to the former component and having its aspect ratio changed for imaging at the other aspect ratio;

(b) an image sensor adapted to be irradiated with the light from said lens mounts to convert it into an electric signal no matter which of said aspect ratios might be used for the imaging by said lens mounts;

(c) a luminance color difference transformation circuit for transforming the output signal of said image sensor into a luminance signal and two color difference signals;

(d) a luminance signal recording processor circuit for transforming the output luminance signal of said luminance color difference transformation circuit into an FM signal determined in conformity to the VTR recording standards;

(e) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(f) an adder for adding the FM signal, i.e., the output of said luminance signal recording processor circuit and the subcarrier orthogonal two-phase modulation signal, i.e., the output of said chromaticity signal recording processor circuit;

(g) a recording amplifier for amplifying the output of said adder;

(h) a video head made receptive of the output of said recording amplifier for recording it in a recording medium, when said VTR unit is in the recording state, and for playing back the signal from said recording medium when said VTR unit is in the play-back state;

(i) a play-back amplifier for amplifying the play-back signal output of said video head;

(j) a luminance signal play-back processor circuit made receptive of the output of said play-back amplifier for demodulating the FM signal;

(k) a chromaticity signal play-back processor circuit made receptive of the output of said play-back amplifier for frequency-transforming the subcarrier orthogonal two-phase modulation signal of two color difference signals determined in conformity to the VTR recording standards into the subcarrier orthogonal two-phase modulation signal determined in conformity to the TV standards;

( l ) means for discriminating the aspect ratio at an imaging unit, adapted to discriminate the aspect ratio of an image being taken at said lens mounts to output the result as a first logical signal; and

(m) an identification signal adder circuit for adding a signal for identifying the aspect ratio to one or both of the luminance signal and the chromaticity signal to be recorded in said VTR unit, in accordance with the level of said first logical signal;

(n) an identification signal detector circuit for detecting the identification signal of said aspect ratio from one or both of the luminance signal and the chromaticity signal played back in said VTR unit, to output it as a second logical signal indicating the aspect ratio of the play-back signal;

(o) an electronic view finder for projecting the whole field angle of an image to be taken, when said VTR unit is in the stopped or recording state, to switch the degree of vertical or horizontal expansions of the displayed image, as observed from the outside of the system, in accordance with the level of said first logical signal and, when said VTR unit is in the play-back state, to switch the degree of vertical or horizontal expansions of the displayed image, as observed from the outside of the system, in accordance with the level of said second logical signal;

(p) a first switching circuit for switching and feeding at least the input signal of said luminance signal recording processor circuit to said electronic view finder, when said VTR unit is in the stopped or recording state, and at least the output signal of said luminance signal play-back processor circuit to said electronic view finder, when the same is in the play-back state; and

(q) a second switching circuit for switching and feeding said first logical signal, when said VTR unit is in the stopped or recording state, and said second logical signal, when the same is in the play-back state, to said electronic view finder.

4. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording and playing-back; and a view finder unit capable of monitoring an image,

wherein the improvement comprises:

(a) lens mounts including: either separate components, one of which is used for imaging at one of said aspect ratios and the other of which is used for imaging at the other aspect ratio so that one of them may be selected for use by a user; or one component for imaging at one of said aspect ratios and another component made detachable with respect to the former component and having its aspect ratio changed for imaging at the other aspect ratio;

(b) an image sensor adapted to be irradiated with the light from said lens mounts to convert it into an electric signal no matter which of said aspect ratios might be used for the imaging by said lens mounts;

(c) a luminance color difference transformation circuit for transforming the output signal of said image sensor into a luminance signal and two color difference signals;

(d) means for discriminating the aspect ratio at an imaging unit, adapted to discriminate the aspect ratio of an image being taken at said lens mounts to output the result as a first logical signal;

(e) a luminance signal recording processor circuit made receptive of the output luminance signal of said luminance color difference transformation circuit for transforming it into an FM signal and made receptive of said first logical signal for increasing the carrier frequency of said FM signal to a higher level for the signal processing at the aspect ratio of m : n than that at an aspect ratio of 4 : 3 in accordance with the level of said first logical signal;

(f) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(g) an adder for adding the FM signal, i.e., the output of said luminance signal recording processor circuit and the subcarrier orthogonal two-phase modulation signal, i.e., the output of said chromaticity signal recording processor circuit;

(h) a recording amplifier for amplifying the output of said adder;

(i) a video head made receptive of the output of said recording amplifier for recording it in a recording medium, when said VTR unit is in the recording state, and for playing back the signal from said recording medium when said VTR unit is in the play-back state;

(j) a play-back amplifier for amplifying the play-back signal output of said video head;

(k) a luminance signal play-back processor circuit made receptive of the output of said play-back amplifier for demodulating the FM signal;

( l ) a chromaticity signal play-back processor circuit made receptive of the output of said play-back amplifier for frequency-transforming the subcarrier orthogonal two-phase modulation signal of two color difference signals determined in conformity to the VTR recording standards into the subcarrier orthogonal two-phase modulation signal determined in conformity to the TV standards;

(m) means for discriminating the aspect ratio of a play-back signal, made receptive of the output of said play-back amplifier for discriminating which of the aspect ratio of the play-back signal is at m : n or 4 : 3 on the basis of the carrier frequency of said FM signal to output a second logical signal indicating the discrimination result;

(n) an electronic view finder for projecting the whole field angle of an image to be taken, when said VTR unit is in the stopped or recording state, to switch the degree of vertical or horizontal expansions of the displayed image, as observed from the outside of the system, in accordance with the level of said first logical signal and, when said VTR unit is in the play-back state, to switch the degree of vertical or horizontal expansions of the displayed image, as observed from the outside of the system, in accordance with the level of said second logical signal;

(o) a first switching circuit for switching and feeding at least the input signal of said luminance signal recording processor circuit to said electronic view finder, when said VTR unit is in the stopped or recording state, and at least the output signal of said luminance signal play-back processor circuit to said electronic view finder, when the same is in the play-back state; and

(p) a second switching circuit for switching and feeding said first logical signal, when said VTR unit is in the stopped or recording state, and said second logical signal, when the same is in the play-back state, to said electronic view finder.

5. A camera recording system according to Claim 1, 2, 3 or 4, wherein said image sensor is a solid-state image sensor or an image tube adapted to be irradiated with the light from said lens mounts all over its face even in case said lens mounts are adapted for the imaging at either of said aspect ratios.

6. A camera recording system according to Claim 1, 2, 3 or 4, wherein said image sensor is a solid-state image sensor having sensors in a number corresponding to the 625 scanning lines in the vertical direction of the image, of which the sensors corresponding to 525 scanning lines are irradiated with the light of said lens mounts all over their horizontal faces even in case said lens mounts are adapted for the imaging at either of said aspect ratios.

7. A recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording; and a view finder unit capable of monitoring an image,
wherein the improvement comprises:

(a) a lens mount for passing the light from an object therethrough and focusing it;

(b) a first change-over switch operated by the user for selecting which of the aspect ratios of m : n and 4 : 3 is used for the imaging, to output a logical signal according to the result;

(c) an image tube having its vertical and horizontal scanning ranges switched to scan the field angle cor responding to the aspect ratio of m : n or 4 : 3 in accordance with the level of said logical signal;

(d) a luminance color difference transformation circuit for transforming the output signal of said image tube into a luminance signal and two color difference signals;

(e) a luminance signal recording processor circuit for transforming the output luminance signal of said luminance color difference transformation circuit into an FM signal determined in conformity to the VTR recording standards;

(f) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(g) an adder for adding the FM signal, i.e, the output of said luminance signal recording processor circuit and the subcarrier orthogonal two-phase modula tion signal, i.e., the output of said chromaticity signal recording processor circuit;

(h) a recording amplifier for amplifying the output of said adder;

(i) a video head for recording the output of said recording amplifier in a recording medium; and

(j) an electronic view finder for projecting the whole field angle of the image to be recorded in said VTR unit, to switch the degree of vertical or horizontal expansion of its displayed image, as observed from the outside of the system, in accordance with the level of said logical signal.

8. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording and playing-back; and a view finder unit capable of monitoring an image,
wherein the improvement comprises:

(a) a lens mount for passing the light from an object therethrough and focusing it;

(b) a change-over switch operated by the user for selecting which of the aspect ratios of m : n and 4 : 3 is used for the imaging, to output a logical signal according to the result;

(c) an image tube having its vertical and horizontal scanning ranges switched to scan the field angle corresponding to the aspect ratio of m : n or 4 : 3 in accordance with the level of said logical signal;

(d) a luminance color difference transformation circuit for transforming the output signal of said image tube into a luminance signal and two color difference signals;

(e) a luminance signal recording processor circuit for transforming the output luminance signal of said luminance color difference transformation circuit into an FM signal determined in conformity to the VTR recording standards;

(f) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency- transform the same into a subcarrier orthogonal two-phase modulation signal determined in conformity to the VTR recording standards;

(g) an adder for adding the FM signal, i.e., the output of said luminance signal recording processor circuit and the subcarrier orthogonal two-phase modulation signal, i.e, the output of said chromaticity signal recording processor circuit;

(h) a recording amplifier for amplifying the output of said adder;

(i) a video head made receptive of the output of said recording amplifier for recording it in a recording medium;

(j) a play-back amplifier for amplifying the play-back signal output of said video head;

(k) a luminance signal play-back processor circuit made receptive of the output of said play-back amplifier for demodulating the FM signal;

( l ) a chromaticity signal play-back processor circuit made receptive of the output of said play-back amplifier for frequency-transforming the subcarrier orthogonal two-phase modulation signal of two color difference signals determined in conformity to the VTR recording standards into the subcarrier orthogonal two-phase modulation signal determined in conformity to the TV standards;

(m) an electronic view finder for projecting the whole field angle of the image to be recorded, when said VTR unit is in the stopped or recording state, to switch the degree of vertical or horizontal expansion of its displayed image, as observed from the outside of the system, in accordance with the level of said logical signal; and

(n) a switching circuit for switching at least the input signal to said luminance signal recording processor circuit, when said VTR unit is in the stopped or recording state, and at least the output signal of said luminance signal play-back processor circuit when the same is in the play-back state.

9. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording and playing-back; and a view finder unit capable of monitoring an image,
wherein the improvement comprises:

(a) a lens mount for passing the light from an object therethrough and focusing it;

(b) a change-over switch operated by the user for selecting which of the aspect ratios of m : n and 4 3 is used for the imaging, to output a first logical signal according to the result;

(c) an image tube having its vertical and horizontal scanning ranges switched to scan the field angle corresponding to the aspect ratio of m : n or 4 : 3 in accordance with the level of said first logical signal;

(d) a luminance color difference transformation circuit for transforming the output signal of said image tube into a luminance signal and two color difference signals;

(e) a luminance signal recording processor circuit for transforming the output luminance signal of said luminance color difference transformation circuit into an FM signal determined in conformity to the VTR recording standards;

(f) a chromaticlty signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(g) an adder for adding the FM signal, i.e., the output of said luminance signal recording processor circuit and the subcarrier orthogonal two-phase modulation signal, i.e., the output of said chromaticity signal recording processor circuit;

(h) a recording amplifier for amplifying the output of said adder;

(i) a video head made receptive of the output of said recording amplifier for recording it in a recording medium, when said VTR unit is in the recording state, and for playing back the signal from said recording medium when said VTR unit is in the play-back state;

(j) a play-back amplifier for amplifying the play-back signal output of said video head;

(k) a luminance signal play-back processor circuit made receptive of the output of said play-back amplifier for demodulating the FM signal;

( l ) a chromaticity signal play-back processor circuit made receptive of the output of said play-back ampli fier for frequency-transforming the subcarrier orthogonal two-phase modulation signal of two color difference signals determined in conformity to the VTR recording standards into the subcarrier orthogonal two-phase modulation signal determined in conformity to the TV standards;

(m) an identification signal adder circuit for adding a signal for identifying the aspect ratio to one or both of the luminance signal and the chromaticity signal to be recorded in said VTR unit, in accordance with the level of said first logical signal;

(n) an identification signal detector circuit for detecting the identification signal of said aspect ratio from one or both of the luminance signal and the chromaticity signal played back in said VTR unit, to output it as a second logical signal indicating the aspect ratio of the play-back signal;

(o) an electronic view finder for projecting the whole field angle of an image to be taken, when said VTR unit is in the stopped or recording state, to switch the degree of vertical or horizontal expansions of the displayed image, as observed from the outside of the system, in accordance with the level of said first logical signal and, when said VTR unit is in the play-back state, to switch the degree of vertical or horizontal expansions of the displayed image, as observed from the outside of the system, in accordance with the level of said second logical signal;

(p) a first switching circuit for switching and feeding at least the input signal of said luminance signal recording processor circuit to said electronic view finder, when said VTR unit is in the stopped or recording state, and at least the output signal of said luminance signal play-back processor circuit to said electronic view finder, when the same is in the play-back state; and

(q) a second switching circuit for switching and feeding said first logical signal, when said VTR unit is in the stopped or recording state, and said second logical signal, when the same is in the play-back state, to said electronic view finder.

10. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording and playing-back; and a view finder unit capable of monitoring an image, wherein the improvement comprises:

(a) a lens mount for passing the light from an object therethrough and focusing it;

(b) a first change-over switch operated by the user for selecting which of the aspect ratios of m : n and 4 : 3 is used for the imaging, to output a first logical signal according to the result;

(c) an image tube having its vertical and horizontal scanning ranges switched to scan the field angle corresponding to the aspect ratio of m : n or 4 : 3 in accordance with the level of said first logical signal;

(d) a luminance color difference transformation circuit for transforming the output signal of said image sensor into a luminance signal and two color difference signals;

(e) a luminance signal recording processor circuit made receptive of the output luminance signal of said luminance color difference transformation circuit for transforming it into an FM signal and made receptive of said first logical signal for increasing the carrier frequency of said FM signal to a higher level for the signal processing at the aspect ratio of m : n than that at an aspect ratio of 4 : 3 in accordance with the level of said first logical signal;

(f) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(g) an adder for adding the FM signal, i.e., the output of said luminance signal recording processor circuit and the subcarrier orthogonal two-phase modulation signal, i.e., the output of said chromaticity signal recording processor circuit;

(h) a recording amplifier for amplifying the output of said adder;

(i) a video head made receptive of the output of said recording amplifier for recording it in a recording medium, when said VTR unit is in the recording state, and for playing back the signal from said recording medium when said VTR unit is in the play-back state;

(j) a play-back amplifier for amplifying the play-back signal output of said video head;

(k) a luminance signal play-back processor circuit made receptive of the output of said play-back amplifier for demodulating the FM signal;

( l ) a chromaticity signal play-back processor circuit made receptive of the output of said play-back amplifier for frequency-transforming the subcarrier orthogonal two-phase modulation signal of two color difference signals determined in conformity to the VTR recording standards into the subcarrier orthogonal two-phase modulation signal determined in conformity to the TV standards;

(m) means for discriminating the aspect ratio of a play-back signal, made receptive of the output of said play-back amplifier for discriminating which of the aspect ratio of the play-back signal is at m : n or 4 3 on the basis of the carrier frequency of said FM signal to output a second logical signal indicating the discrimination result;

(n) an electronic view finder for projecting the whole field angle of an image to be taken, when said VTR unit is in the stopped or recording state, to switch the degree of vertical or horizontal expansions of the displayed image, as observed from the outside of the system, in accordance with the level of said first logical signal and, when said VTR unit is in the play-back state, to switch the degree of vertical or horizontal expansions of the displayed image, as observed from the outside of the system, in accordance with the level of said second logical signal;

(o) a first switching circuit for switching and feeding at least the input signal of said luminance signal recording processor circuit to said electronic view finder, when said VTR unit is in the stopped or recording state, and at least the output signal of said luminance signal play-back processor circuit to said electronic view finder, when the same is in the play-back state; and

(p) a second switching circuit for switching and feeding said first logical signal, when said VTR unit is in the stopped or recording state, and said second logical signal, when the same is in the play-back state, to said electronic view finder.

11. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording; and a view finder unit capable of monitoring an image, wherein the improvement comprises:

(a) a lens mount for passing the light from an object there through and focusing it;

(b) a change-over switch operated by the user for selecting which of the aspect ratios of m : n and 4 : 3 is used for the imaging, to output a logical signal according to the result;

(c) an image sensor including a solid-state image sensor or an image tube adapted to be irradiated with the light of said lens mount all over its whole plane to convert it into an electric signal based upon the aspect ratio of m : n;

(d) a luminance color difference transformation circuit for transforming the output signal of said image sensor into a luminance signal and two color difference signals;

(e) an expander circuit made receptive of the output of said luminance color difference transformation circuit and said logical circuit for passing the output of said luminance color difference transformation circuit as it is, when in the imaging at the aspect ratio of m : n, and for expanding the horizontal center portion 4n/3m of the image to 3m/4n times on the time axis with the horizontal period being unchanged, to output the expanded one when in the imaging at the aspect ratio of 4 : 3;

(f) a luminance signal recording processor circuit for transforming the output luminance signal of said luminance color difference transformation circuit into an FM signal determined in conformity to the VTR recording standards;

(g) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(h) an adder for adding the FM signal, i.e., the output of said luminance signal recording processor circuit and the subcarrier orthogonal two-phase modulation signal, i.e., the output of said chromaticity signal recording processor circuit;

(i) a recording amplifier for amplifying the output of said adder;

(j) a video head for recroding the output of said recording amplifier in a recording medium; and

(k) an electronic view finder including either:

a display unit corresponding to the aspect ratio of m : n and fed with both at least the luminance signal of the output of said luminance color difference transformation circuit and said logical signal for projecting them as they are, when in the imaging at the aspect ratio of m : n, and for either blanking those portions outside of the horizontal field angle, which are established due to the difference in the aspect ratio or displaying lines indicating the ends of the field angle, when in the imaging at the aspect ratio of 4 : 3, both in accordance with the signal level; or

a display unit corresponding to the aspect ratio of 4 : 3 and fed with both at least the luminance signal of the output of said expander circuit and said logical signal for projecting them with the vertical scanning width narrowed to 4n/3m, when in the imaging at the aspect ratio of m : n, and for projecting them as they are, when in the imaging at the aspect ratio of 4 : 3, both in accordance with the signal level.

12. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; a VTR unit capable of recording; and a view finder unit capable of monitoring an image,

wherein the improvement comprises:

(a) a lens mount for passing the light from an object therethrough and focusing it;

(b) a change-over switch operated by the user for selecting which of the aspect ratios of m : n and 4 3 is used for the imaging, to output a logical signal according to the result;

(c) an image sensor including a solid-state image sensor or an image tube adapted to be irradiated with the light of said lens mount all over its whole plane to convert it into an electric signal based upon the aspect ratio of m : n;

d) a luminance color difference transformation circuit for transforming the output signal of said image sensor into a luminance signal and two color difference signals;

(e) an expander circuit made receptive of the output of said luminance color difference transformation circuit and said logical circuit for passing the output of said luminance color difference transformation circuit as it is, when in the imaging at the aspect ratio of m : n, and for expanding the horizontal center portion 4n/3m of the image to 3m/4n times on the time axis with the horizontal period being unchanged, to output the expanded one when in the imaging at the aspect ratio of 4 : 3;

(f) a luminance signal recording processor circuit for transforming the output luminance signal of said luminance color difference transformation circuit into an FM signal determined in conformity to the VTR recording standards;

(g) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(h) an adder for adding the FM signal, i.e., the output of said luminance signal recording processor circuit and the subcarrier orthogonal two-phase modulation signal, i.e., the output of said chromaticity signal recording processor circuit;

(i) a recording amplifier for amplifying the output of said adder;

(j) a video head for recording the output of said recording amplifier in a recording medium;

(k) a play-back amplifier for amplifying the play-back signal output of said video head;

( l ) a luminance signal play-back processor circuit made receptive of the output of said play-back amplifier for demodulating the FM signal;

(m) a chromaticity signal play-back processor circuit made receptive of the output of said play-back amplifier for frequency-transforming the subcarrier orthogonal two-phase modulation signal of two color difference signals determined in conformity to the VTR recording standards into the subcarrier orthogonal two-phase modulation signal determined in conformity to the TV standards;

(n) an electronic view finder including either:

a display unit corresponding to the aspect ratio of m : n and fed with both at least the luminance sig nal of the output of said luminance color difference transformation circuit and said logical signal, when said VTR unit is in the stopped or recording state, for projecting them as they are, in the imaging case at the aspect ratio of m : n, and for either blanking those portions outside of the horizontal field angle, which are established due to the difference in the aspect ratio or displaying lines indicating the ends of the field angle, in the imaging case at the aspect ratio of 4 : 3, both in accordance with the signal level, and, when said VTR unit is in the play-back state, for projecting the signal at the aspect ratio of m : n as it is, in case it is played back, in accordance with the level of said logical circuit and for switching the degree of the vertical or horizontal expansion of the displayed image, as viewed from the outside of the system, in case the signal at the aspect ratio of 4 : 3 is played back; or

a display unit corresponding to the aspect ratio of 4 : 3 and fed with both at least the luminance signal of the output of said expander circuit and said logical.signal, when said VTR unit is in the play-back state, for projecting them with the vertical scanning width narrowed to 4n/3m, in the imaging case at the aspect ratio of m : n, and for projecting them as they are, in the imaging case at the aspect ratio of 4 : 3, both in accordance with the signal level, and, when said VTR unit is in the play-back state, for projecting them with the vertical scanning width narrowed to 4n/3m, in the play-back case at the aspect ratio of m n, and for projecting them as they are, in the play-back case at the aspect ratio of 4 : 3, both in accordance with the level of said logical signal; and

(o) a switching circuit for switching at least the luminance signal of the output of said luminance color difference transformation circuit, when said VTR unit is in the stopped or recording state, and at least the output signal of said luminance signal play-back processor circuit when the same is in the play-back state.

13. A camera recording system comprising: a camera unit capable of selectively imaging an image having an aspect ratio - a ratio between the horizontal length and vertical length of a frame - of 4 : 3 as in the NTSC system and an image having a horizontally longer aspect ratio of $m : n$ $(m/n > 4/3)$ than the former ratio; a VTR unit capable of recording; and a view finder unit capable of monitoring an image,

(a) a lens mount for passing the light from an object therethrough and focusing it;

(b) a change-over switch operated by the user for selecting which of the aspect ratios of $m : n$ and 4 3 is used for the imaging, to output a first logical signal according to the result;

(c) an image sensor including a solid-state image sensor or an image tube adapted to be irradiated with the light of said lens mount all over its whole plane to convert it into an electric signal based upon the aspect ratio of $m : n$;

(d) a luminance color difference transformation circuit for transforming the output signal of said image sensor into a luminance signal and two color difference signals;

(e) an expander circuit made receptive of the output of said luminance color difference transformation circuit and said logical circuit for passing the output of said luminance color difference transformation circuit as it is, when in the imaging at the aspect ratio of $m : n$, and for expanding the horizontal center portion $4n/3m$ of the image to $3m/4n$ times on the time axis with the horizontal period being unchanged, to output the expanded one when in the imaging at the aspect ratio of 4 : 3;

(f) a luminance signal recording processor circuit for transforming the output luminance signal of said luminance color difference transformation circuit into an FM signal determined in conformity to the VTR recording standards;

(g) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(h) an adder for adding the FM signal, i.e., the output of said luminance signal recording processor circuit and the subcarrier orthogonal two-phase modulation signal, i.e., the output of said chromaticity signal recording processor circuit;

(i) a recording amplifier for amplifying the output of said adder;

(j) a video head for recording the output of said recording amplifier in a recording medium;

(k) a play-back amplifier for amplifying the play-back signal output of said video head;

( l ) a luminance signal play-back processor circuit made receptive of the output of said play-back amplifier for demodulating the FM signal;

(m) a chromaticity signal play-back processor circuit made receptive of the output of said play-back amplifier for frequency-transforming the subcarrier orthogonal two-phase modulation signal of two color difference signals determined in conformity to the VTR recording standards into the subcarrier orthogonal two-phase modulation signal determined in conformity to the TV standards;

(n) an identification signal adder circuit for adding a signal for identifying the aspect ratio to one or both of the luminance signal and the chromaticity signal to be recorded in said VTR unit, in accordance with the level of said first logical signal;

(o) an identification signal detector circuit for detecting the identification signal of said aspect ratio from one or both of the luminance signal and the chromaticity signal played back in said VTR unit, to output it as a second logical signal indicating the aspect ratio of the play-back signal;

(p) an electronic view finder including either:

a display unit corresponding to the aspect ratio of $m : n$ and fed with both at least the luminance signal of the output of said luminance color difference transformation circuit and said first logical signal, when said VTR unit is in the stopped or recording state, for projecting them as they are, in the imaging case at the aspect ratio of $m : n$, and for either blanking those portions outside of the horizontal field angle, which are established due to the difference in the aspect ratio or displaying lines indicating the ends of the field angle, in the imaging case at the aspect ratio of 4 : 3, both in accordance with the signal level, and, when said VTR unit is in the play-back state, for projecting the signal at the aspect ratio of $m : n$ as it is, in case it is played back, in accordance with the level of said second logical circuit and for switching the degree of the vertical or horizontal expansion of the displayed image, as viewed from the outside of the system, in case the signal at the aspect ratio of 4 : 3 is played back; or

a display unit corresponding to the aspect ratio of 4 : 3 and fed with both at least the luminance signal of the output of said expander circuit and said first logical signal, when said VTR unit is in the play-back state, for projecting them with the vertical scanning width narrowed to 4n/3m, in the imaging case at the aspect ratio of m : n, and for projecting them as they are, in the imaging case at the aspect ratio of 4 : 3, both in accordance with the signal level, and, when said VTR unit is in the play-back state, for projecting them with the vertical scanning width narrowed to 4n/3m, in the play-back case at the aspect ratio of m : n, and for projecting them as they are, in the play-back case at the aspect ratio of 4 : 3, both in accordance with the level of said second logical signal;

(q) a first switching circuit for switching and feeding at least the input signal of said luminance signal recording processor circuit to said electronic view finder, when said VTR unit is in the stopped or recording state, and at least the output signal of said luminance signal play-back processor circuit to said electronic view finder, when the same is in the play-back state; and

(r) a second switching circuit for switching and feeding said first logical signal, when said VTR unit is in the stopped or recording state, and said second logical signal, when the same is in the play-back state, to said electronic view finder.

14. A recording system comprising: a camera unit capable of selectively imaging an image having an aspect ratio a ratio between the horizontal length and vertical length of a frame - of 4 : 3 as in the NTSC system and an image having a horizontally longer aspect ratio of m : n (m/n > 4/3) than the former ratio; a VTR unit capable of recording; and a view finder unit capable of monitoring an image, wherein the improvement comprises:

(a) a lens mount for passing the light from an object therethrough and focusing it;

(b) a change-over switch operated by the user for selecting which of the aspect ratios of m : n and 4 : 3 is used for the imaging, to output a first logical signal according to the result;

(c) an image sensor including a solid-state image sensor or an image tube adapted to be irradiated with the light of said lens mount all over its whole plane to convert it into an electric signal based upon the aspect ratio of m : n; (d) a luminance color difference transformation circuit for transforming the output signal of said image sensor into a luminance signal and two color difference signals;

(e) an expander circuit made receptive of the output of said luminance color difference transformation circuit and said logical circuit for passing the output of said luminance color difference transformation circuit as it is, when in the imaging at the aspect ratio of m : n, and for expanding the horizontal center portion 4n/3m of the image to 3m/4n times on the time axis with the horizontal period being unchanged, to output the expanded one when in the imaging at the aspect ratio of 4 : 3;

(f) a luminance signal recording processor circuit for transforming the output luminance signal of said luminance color difference transformation circuit into an FM signal determined in conformity to the VTR recording standards;

(g) a chromaticity signal recording processor circuit adapted to transform the two color difference signals, i.e., the output of said luminance color difference transformation circuit either into a subcarrier orthogonal two-phase modulation signal determined the VTR recording standards or into a subcarrier orthogonal two-phase modulation signal determined in conformity to the TV standards and then to frequency-transform the same into a subcarrier orthogonal two-phase modulation signal determined in conformity to the VTR recording standards;

(h) an adder for adding the FM signal, i.e., the output of said luminance signal recording processor circuit and the subcarrier orthogonal two-phase modulation signal, i.e., the output of said chromaticity signal recording processor circuit;

(i) a recording amplifier for amplifying the output of said adder;

(j) a video head for recording the output of said recording amplifier in a recording medium;

(k) a play-back amplifier for amplifying the play-back signal output of said video head;

( l ) a luminance signal play-back processor circuit made receptive of the output of said play-back amplifier for demodulating the FM signal;

(m) a chromaticity signal play-back processor circuit made receptive of the output of said play-back amplifier for frequency-transforming the subcarrier orthogonal two-phase modulation signal of two color difference signals determined in conformity to the VTR recording standards into the subcarrier orthogonal two-phase modulation signal determined in conformity to the TV standards;

(n) means for discriminating the aspect ratio of a play-back signal, made receptive of the output of said play-back amplifier for discriminating which of the aspect ratio of the play-back signal is at m : n or 4 : 3 on the basis of the carrier frequency of said FM signal to output a second logical signal indicating the discrimination result;

21

(o) an electronic view finder including either:

a display unit corresponding to the aspect ratio of m : n and fed with both at least the luminance signal of the output of said luminance color difference transformation circuit and said first logical signal, when said VTR unit is in the stopped or recording state, for projecting them as they are, in the imaging case at the aspect ratio of m : n, and for either blanking those portions outside of the horizontal field angle, which are established due to the difference in the aspect ratio or displaying lines indicating the ends of the field angle, in the imaging case at the aspect ratio of 4 : 3, both in accordance with the signal level, and, when said VTR unit is in the play-back state, for projecting the signal at the aspect ratio of m : n as it is, in case it is played back, in accordance with the level of said second logical circuit and for switching the degree of the vertical or horizontal expansion of the displayed image, as viewed from the outside of the system, in case the signal at the aspect ratio of 4 : 3 is played back; or

a display unit corresponding to the aspect ratio of 4 : 3 and fed with both at least the luminance signal of the output of said expander circuit and said first logical signal, when said VTR unit is in the play-back state, for projecting them with the vertical scanning width narrowed to 4n/3m, in the imaging case at the aspect ratio of m : n, and for projecting them as they are, in the imaging case at the aspect ratio of 4 : 3, both in accordance with the signal level, and, when said VTR unit is in the play-back state, for projecting them with the vertical scanning width narrowed to 4n/3m, in the play-back case at the aspect ratio of m : n, and for projecting them as they are, in the play-back case at the aspect ratio of 4 : 3, both in accordance with the level of said second logical signal;

(p) a first switching circuit for switching and feeding at least the input signal of said luminance signal recording processor circuit to said electronic view finder, when said VTR unit is in the stopped or recording state, and at least the output signal of said luminance signal play-back processor circuit to said electronic view finder, when the same is in the play-back state; and

(q) a second switching circuit for switching and feeding said first logical signal, when said VTR unit is in the stopped or recording state, and said second logical signal, when the same is in the play-back state, to said electronic view finder.

15. A camera recording system according to Claim 1, 2, 7, 8, 11 or 12, wherein either or both of said luminance signal recording processor circuit and said chromatlcity signal recording processor circuit add a signal for identifying the aspect ratio in accordance with the level of the logical level indicating the aspect ratio at said image unit.

16. A camera recording system according to Claim 1, 2, 7, 8, 11 or 12, wherein said luminance signal recording processor circuit increases the carrier frequency of the FM signal to a higher level, when in the processing of the signal at the aspect ratio of m : n, than that of the processing of the signal at the aspect ratio of 4 : 3 in accordance with the level of the logical signal indicating the aspect ratio at said image unit.

17. A camera recording system according to any of Claims 1 to 4 and 7 to 14, wherein said electronic view finder has at its display portion a function to display which of said aspect ratios is used for the imaging.

18. A camera recording system comprising:

(a) a camera capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio;

(b) a VTR for recording the output image signal of said camera; and

(c) a view finder capable of projecting at least an image to be taken over its whole field angle, no matter which of said aspect ratios might be used for the imaging.

19. A camera recording system according to Claim 18, wherein said view finder is an optical view finder having a function to indicate which of said aspect ratios is used for the imaging, or the field angle of the imaging.

20. A camera recording system according to Claim 18, wherein said view finder is an electronic view finder having a function to indicate at its display portion which of said aspect ratios is used for the imaging.

21. A camera recording system according to Claim 18, wherein said view finder is an electronic view finder having its degree of vertical or horizontal expansion of its displayed image switched in accordance with the aspect ratio of the image to be taken by said camera.

22. A camera recording system according to any of Claims 1 to 4, 7 to 14 and 18, further comprising an output terminal for outputting to the outside a logical signal indicating the aspect ratio of a signal being imaged or played back.

23. A camera system capable of selectively imaging an image having an aspect ratio - a ratio between the horizontal length and vertical length of a frame - of 4 : 3 as in the NTSC system and an image having.a horizontally longer aspect ratio of m : n (m/n > 4/3) than the former ratio,

(a) lens mounts including: either separate components, one of which is used for imaging at one of said aspect ratios and the other of which is used for imaging at the other aspect ratio so that one of them may be selected for use by a user; or one component for imaging at one of said aspect ratios and another component made detachable with respect to the former component and having its aspect ratio changed for imaging at the other aspect ratio;

(b) an image sensor adapted to be irradiated with the light from said lens mounts to convert it into an electric signal no matter which of said aspect ratios might be used for the imaging by said lens mounts;

(c) a luminance color difference transformation circuit for transforming the output signal of said image sensor into a luminance signal and two color difference signals;

(d) means for discriminating the aspect ratio at an imaging unit, adapted to discriminate the aspect ratio of an image being taken at said lens mounts to output the result as a logical signal; and

(e) an electronic view finder for projecting the whole field angle of the image to be recorded in said VTR unit, to switch the degree of vertical or horizontal expansion of its displayed image, as observed from the outside of the system, in accordance with the level of said logical signal.

24. A camera system according to Claim 23, wherein said image sensor is a solid-state image sensor or an image tube adapted to be irradiated with the light from said lens mounts all over its face even in case said lens mounts are adapted for the imaging at either of said aspect ratios.

25. A camera system according to Claim 23, wherein said image sensor is a solid-state image sensor having sensors in a number corresponding to the 625 scanning lines in the vertical direction of the image, of which the sensors corresponding to 525 scanning lines are irradiated with the light of said lens mounts all over their horizontal faces even in case said lens mounts are adapted for the imaging at either of said aspect ratios.

26. A camera system capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio, wherein the improvement comprises:

(a) a lens mount for passing the light from an object therethrough and focusing it;

(b) a first change-over switch operated by the user for selecting which of the aspect ratios of m : n and 4 : 3 is used for the imaging, to output a logical signal according to the result;

(c) an image tube having its vertical and horizontal scanning ranges switched to scan the field angle corresponding to the aspect ratio of m : n or 4 : 3 in accordance with the level of said logical signal;

(d) a luminance color difference transformation circuit for transforming the output signal of said image sensor into a luminance signal and two color difference signals; and

(e) an electronic view finder for projecting the whole field angle of the image to be recorded in said VTR unit, to switch the degree of vertical or horizontal expansion of its displayed image, as observed from the outside of the system, in accordance with the level of said logical signal.

27. A camera system capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio, wherein the improvement comprises:

(a) a lens mount for passing the light from an object therethrough and focusing it;

(b) a change-over switch operated by the user for selecting which of the aspect ratios of m : n and 4 : 3 is used for the imaging, to output a logical signal according to the result;

c) an image sensor including a solid-state image sensor or an image tube adapted to be irradiated with the light of said lens mount all over its whole plane to convert it into an electric signal based upon the aspect ratio of m : n;

(d) a luminance color difference transformation circuit for transforming the output signal of said image sensor into a luminance signal and two color difference signals;

(e) an expander circuit made receptive of the output of said luminance color difference transformation circuit and said logical circuit for passing the output of said luminance color difference transformation circuit as it is, when in the imaging at the aspect ratio of m : n, and for expanding the horizontal center portion 4n/3m of the image to 3m/4n times on the time axis with the horizontal period being unchanged, to output the expanded one when in the imaging at the aspect ratio of 4 : 3; and

(f) an electronic view finder including either: a display unit corresponding to the aspect ratio of m : n and fed with both at least the luminance signal of the output of said luminance color difference transformation circuit and said logical signal for projecting them as they are, when in the imaging at the aspect ratio of m : n, and for either blanking those portions outside of the horizontal field angle, which are established due to the difference in the aspect ratio or displaying lines indicating the ends of the field angle, when in the imaging at the aspect ratio of 4 : 3, both in accordance with the signal level; or

a display unit corresponding to the aspect ratio of 4 : 3 and fed with both at least the luminance signal of the output of said expander circuit and said logical signal for projecting them with the vertical scanning width narrowed to 4n/3m, when in the imaging at the aspect ratio of m : n, and for projecting them as they are, when in the imaging at the aspect ratio of 4 : 3, both in accordance with the signal level.

28. A camera system comprising:

(a) a camera capable of selectively imaging an image having an aspect ratio - a ratio between the horizontal length and vertical length of a frame - of 4 : 3 as in the NTSC system and an image having a horizontally longer aspect ratio of m : n (m/n > 4/3) than the former ratio; and

(b) a view finder capable of projecting at least an image to be taken over its whole field angle, no matter which of said aspect ratios might be used for the imaging.

29. A camera recording system according to Claim 28, wherein said view finder is an optical view finder having a function to indicate which of said aspect ratios is used for the imaging, or the field angle of the imaging.

30. A camera recording system according to Claim 28, wherein said view finder is an electronic view finder having a function to indicate at its display portion which of said aspect ratios is used for the imaging.

31. A camera recording system according to Claim 28, wherein said view finder is an electronic view finder having its degree of vertical or horizontal expansion of its displayed image switched in accordance with the aspect ratio of the image to be taken by said camera.

32. A camera system according to Claim 23, 26, 27 or 28, further comprising an output terminal for outputting to the outside a logical signal indicating the aspect ratio of the signal being imaged.

FIG. 1

EP 0 411 440 A2

# FIG. 2

# FIG. 3(a)

# FIG. 3(b)

# FIG. 4(a)

**5B**
SOLID-STATE
IMAGE SENSOR

**4B**
NORMAL
SPHERICAL
LENS

# FIG. 4(b)

**5B**
SOLID-STATE
IMAGE SENSOR

**7B**
ANAMORPHIC
OPTICAL LENS

**6B**
NORMAL
SPHERICAL
LENS

# FIG. 5(a)

NORMAL LENS
MOUNT
**8A**

# FIG. 5(b)

LENS MOUNT
INCLUDING ANAMORPHIC
OPTICAL SYSTEM
**8B**

**8B₁**

# FIG. 5(c)

**9A₁**   **9A**

Vcc       **9B**

R1        **9C**

27

# FIG. 6(a)

WIDE ASPECT
RATIO
VIEWFINDER
10A

WIDE

# FIG. 6(b₁)

10A

NORMAL

# FIG. 6(b₂)

10A

NORMAL

# FIG. 7(a₁)

EXISTING ASPECT
RATIO
VIEWFINDER
10B

WIDE

# FIG. 7(a₂)

10B

WIDE

# FIG. 7(b)

10B

NORMAL

# FIG. 10

4:3

28A

14.5:9

625 LINES

525 LINES

28C  28  28B

FIG. 8

EP 0 411 440 A2

# FIG. 9

FIG. 11

FIG. 12(a)

WIDE ASPECT
RATIO NTSC

FIG. 12(b)

EXISTING ASPECT
RATIO NTSC

A     B C     D ¦ F(=A)

E

FIG. 13(a)

WIDE ASPECT
RATIO
VIEWFINDER
10A

WIDE

FIG. 13(b1)

10A

NORMAL

FIG. 13(b2)

10A

NORMAL

FIG. 13(b1')

10A

NORMAL

35

# FIG. 14(a₁)

EXISTING ASPECT RATIO VIEWFINDER

10B

# FIG. 14(a₂)

10B

# FIG. 14(b)

10B

# FIG. 18

34  32

33

WIDE

FIG. 15

FIG. 16

FIG. 17